# EUROPEAN PATENT SPECIFICATION

(11) **EP 2 071 714 B1**
(45) Date of publication and mention of the grant of the patent: **28.03.2012**
(21) Application number: 07828901.4
(22) Date of filing: 01.10.2007
(51) Int. Cl.: H02M 3/158, H02M 3/335, H02M 1/36

(54) **DC/DC CONVERTER**
GLEICHSTROM-GLEICHSTROM-WANDLER
CONVERTISSEUR CC/CC

(30) Priority: 02.10.2006 JP 2006270389
(43) Date of publication of application: 17.06.2009
(73) Proprietor: Panasonic Corporation, Kadoma-shi Osaka 571-8501 (JP)
(72) Inventor: YOSHIDA, Koji, Chuo-ku, Osaka-shi, Osaka 540-6207 (JP); HANDA, Hiroyuki, Chuo-ku, Osaka-shi, Osaka 540-6207 (JP); MATSUO, Mitsuhiro, Chuo-Ku, Osaka-shi, Osaka 540-6207 (JP); AKIMASA, Koji, Chuo-ku, Osaka-shi, Osaka 540-6207 (JP)
(74) Representative: Schwabe - Sandmair - Marx
(86) International application number: PCT/JP2007/069161
(87) International publication number: WO 2008/041666

(56) References cited:
- EP-A2- 1 630 936
- WO-A1-2006/006257
- JP-A- 10 225 105
- JP-A- 2002 218 667
- JP-A- 2002 272 097
- JP-A- 2006 067 692
- US-A1- 2004 169 498
- US-A1- 2007 195 565

## Description

### TECHNICAL FIELD

The present invention relates to a DC-DC converter that converts an input DC voltage into an arbitrary target voltage.

### BACKGROUND ART

Conventionally, DC/DC voltage converters (hereinafter, "DC-DC converters") that convert the voltage of a DC voltage source into an arbitrary target voltage have been used in various fields. As one such DC-DC converter, patent application EP-A-0 532 263 discloses a DC-DC converter that boosts an input voltage.

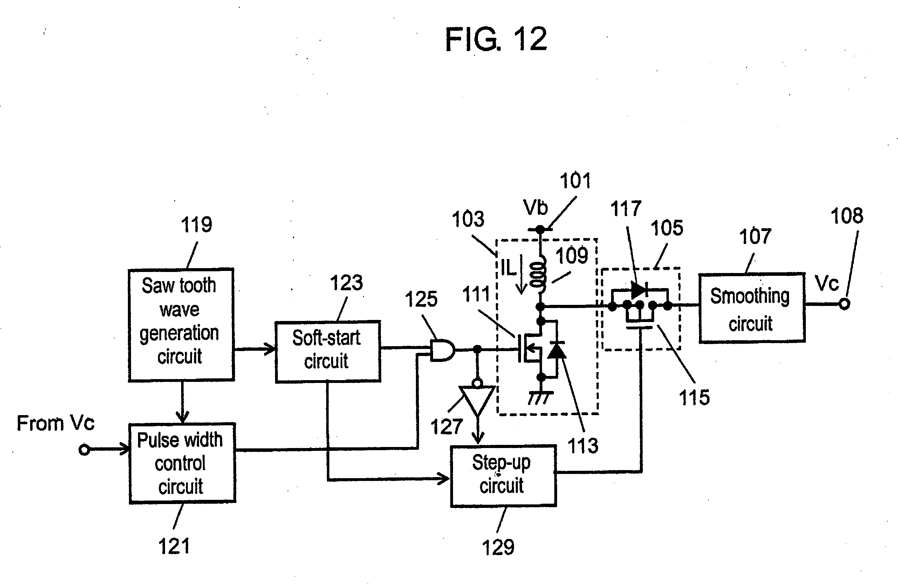

Fig. 12 is a block circuit diagram of the conventional DC-DC converter. In Fig. 12, the converter includes power supply voltage line 101, which is connected to a DC voltage source such as a battery and leads to output terminal 108 via booster circuit 103, gate circuit 105, and smoothing circuit 107. In booster circuit 103, FET 111 is connected at one end in series to coil 109 connected to power supply voltage line 101 and is connected at the other end to the ground. FET 111 is connected in parallel to diode 113. The connection point between coil 109 and FELT 111, that is, the output point of booster circuit 103 is connected to one end of FET 115, which is a component of gate circuit 105. FET 115 is connected in parallel to diode 117, and the other end of FET 115 is connected to smoothing circuit 107.

FETs 111 and 115 are turned on and off under the control of saw-tooth wave generation circuit 119, pulse width control circuit 121, soft-start circuit 123, AND circuit 125, inverting circuit 127, and step-up circuit 129, which are wired as shown in Fig. 12.

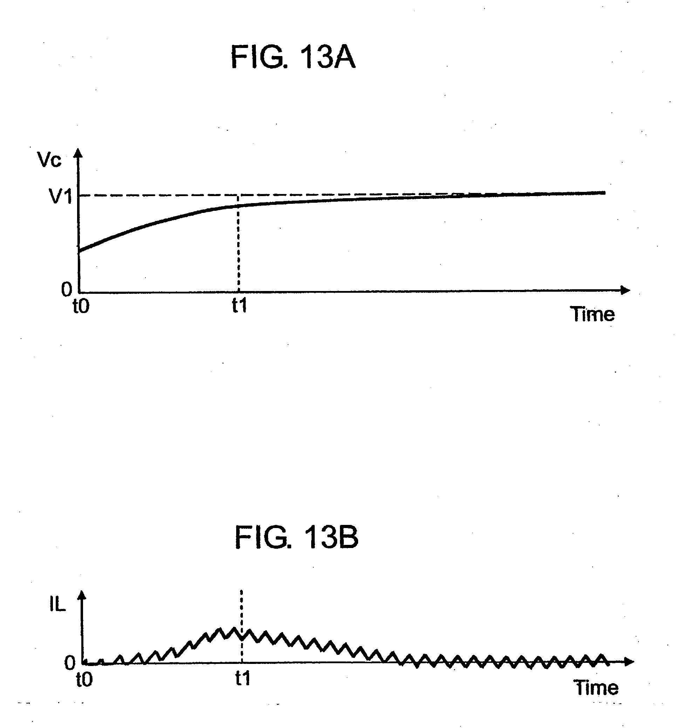

The following is a description of the operation of this DC-DC converter when started normally. Fig. 13A is a graph showing the change in the voltage of the output terminal of this conventional DC-DC converter with time when started normally. In Fig. 13A, the horizontal and vertical axes represent time t and voltage Vc, respectively. Fig. 13B is a graph showing the change in the current flowing through the coil of this DC-DC converter with time when started normally. In Fig. 13B, the horizontal and vertical axes represent time t and current IL, respectively. When the current IL flows from power supply voltage line 101 to coil 109 shown in the direction of the arrow of Fig. 12, the direction is defined as positive.

In Figs. 13A and 13B, from time t0 through t1 in which the DG-DC converter is started, step-up circuit 129 cuts off FET 116. FET 115 is thus placed in the OFF state and diode 117 is directed opposite to the current flow, thereby preventing current backflow from output terminal 108 to booster circuit 103. In this situation, FET 111 is turned on and off in such a manner that its on-off ratio can gradually increase from a minimum on-off ratio. As a result, the voltage of power supply voltage line 101 is started to be boosted. In other words, as shown in time t0 through t1 of Fig. 13A, the voltage Vc of output terminal 108 increases. The current IL flowing through coil 109 increases with some fluctuations according to the on-off operation of FET 111 as shown in Fig. 13B. The current IL, however, never becomes negative in the vicinity of time t0, which is immediately after the DC-DC converter, is started. This is because the turning off of FET 115 prevents current backflow from output terminal 108 to booster circuit 103.

At time t1, the DC-DC converter is brought into stable operation. After that, step-up circuit 129 transmits an on-off driving signal received from inverting circuit 127 intact to FET 115, allowing FETs 111 and 115 to be alternately turned on and off. As a result, the boost operation is efficiently performed to reach a target voltage V1 set by pulse width control circuit 121.

In this manner, the conventional DC-DC converter prevents current backflow at the start-up and efficiently performs a boost operation during the stable operation period.

A power supply device using such a conventional DC-DC converter can perform a boost operation with high reliability due to current backflow prevention and also with high efficiency due to the alternate on-off operation of the two FETs. The DC-DC converter can be used to charge an energy storage (a capacitor, a secondary battery, or the like) connected to output terminal 108 from a DC voltage source. When the voltage of the energy storage is close to the full charger voltage, however, the DC-DC converter performs the following undesirable operation.

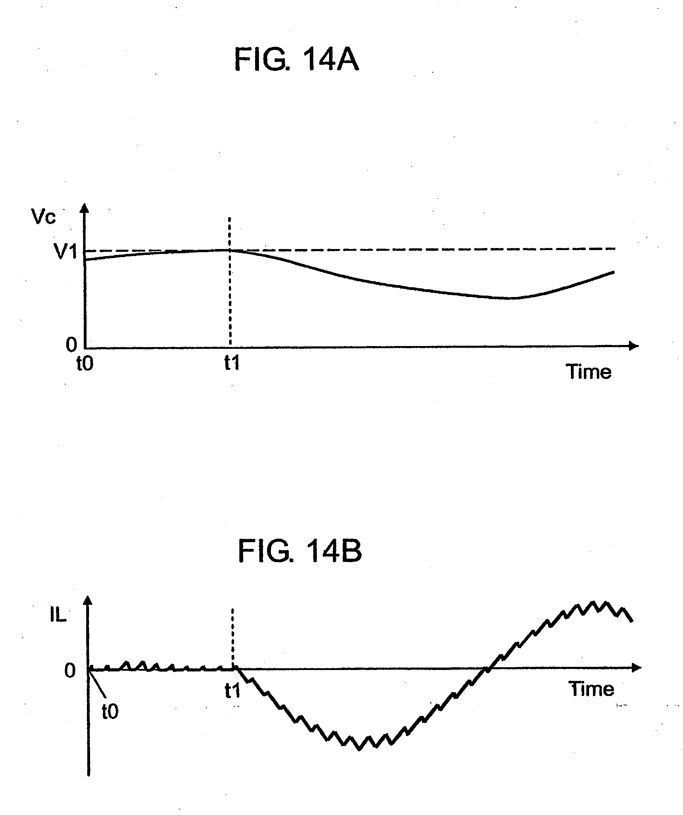

Fig. 14A is a graph showing the change in the voltage of the output terminal of the DC-DC converter with time when the voltage is close to the target voltage. In Fig. 14A, the horizontal and vertical axes represent time t and voltage Vc, respectively. Fig. 14B is a graph showing the change in the current flowing through the coil of the DC-DC converter with time when the voltage of the output terminal is close to the target voltage. In Fig. 14B, the horizontal and vertical axes represent time t and current IL, respectively.

In Figs. 14A and 14B, from time t0 through t1 in which the DC-DC converter is started, step-up circuit 129 cuts off FET 115 in the same manner as in Figs. 13A and 13B, thereby preventing current backflow from output terminal 108 to booster circuit 103. In this situation, FET 111 is turned on and off in such a manner that its on-off ratio can gradually increase from the minimum on-off ratio, so that the voltage boost operation can be started. It is assumed that as shown in time t0 through t1 of Fig. 14A, the voltage Vc of output terminal 108 has reached the target voltage V1 before time t1. In this case, the on-off ratio of FET 111 is made minimum again. Since the on-off ratio of FET 111 is minimum and FET 115 is in the OFF state, the current IL hardly flows as shown in Fig. 14B, and the voltage Vc is kept at the target voltage V1. In the same manner as in Fig. 13B, the current IL never becomes negative to flow back.

At time t1, step-up circuit 129 transmits an on-off driving signal received from inverting circuit 127 intact to FET 115, allowing FETs 111 and 115 to be alternately turned on and off. Since the on-off ratio of FET 111 is minimum at this moment, the on-off ratio of FET 115, which performs a reverse operation to FET 111, becomes maximum. As a result, FET 115, which is held in the OFF state until immediately before time t1, turns on and off at a high on-off ratio from time t1 onward. This causes the current IL to flow back from the energy storage connected to output terminal 108 toward power supply voltage line 101 via FET 115 and coil 109. The backflow is shown from time t1 onward in Fig. 14B. In the vicinity of time t1 in which FET 115 has been ON for long, the absolute value of the backflow current IL suddenly increases. In response, the current flow from the energy storage increases, so that the voltage Vc gradually decreases as shown in Fig. 14A. This operation causes the voltage Vc to be smaller than the target voltage V1, and therefore, pulse width control circuit 121 controls the voltage Vc to be the target voltage V1 by adjusting the on-off ratio of FETs 111 and 115. This shortens the ON time of FET 115, thus decreasing the backflow of the current IL as shown in Fig. 14B. When the current IL becomes positive, the energy storage starts to be charged, so that the voltage Vc starts to increase as shown in Fig. 14A. In this manner, the voltage Vc is again controlled to be the target voltage V1, and after this, FETs 111 and 115 are turned on and off to maintain the voltage V1.

As described above, when the voltage Vc is in the vicinity of the target voltage V1 at the start-up of the DC-DC converter and reaches the target voltage V1 before time t1, as soon as FET 115 starts to turn on and off at time t1, a substantial backflow of the current occurs. To avoid this, it is necessary to use FETs with a rated current high enough to withstand the large amount of current, resulting in cost increase.

The aforementioned substantial backflow of the current can be caused when the DC-DC converter starts to move from a stationary state. Besides that, even if the DC-DC converter is in operation, the backflow can be caused when the DC-DC converter starts synchronous rectification in anticipation of an increase in the power consumption of the load connected to output terminal 108. This is the case, for example, when the DC-DC converter is applied to the electric power steering system of a vehicle. In this case, the DC-DC converter operates as follows.

While the vehicle is normally driven with no steering operation, the electric power steering motor is in the stopped state, so that the electric power steering system requires low power supply. Therefore, as shown from time t0 through t1 of Figs. 14A and 14B, the DC-DC converter controls so that FET 111 has a minimum on-off ratio and FET 115 is in the OFF state, thereby adjusting the voltage Vc to the target voltage V1. This reduces power loss due to the DC-DC converter.

When the driver operates a steering wheel in this situation, a rudder sensor installed in the electric power steering system detects the steering angle. The electric power steering system drives the motor and consumes a large amount of power. The DC-DC converter, however, cannot suddenly supply such a large amount of power to the motor because it controls so that FET 111 has the minimum on-off ratio and that the FET 115 is in the OFF state. Therefore, as soon as the rudder sensor detects the steering angle, the DC-DC converter starts synchronous rectification (alternately turns on and off FETs 111 and 115 so as to maintain the voltage V1) at time t1 of Figs. 14A and 14B in preparation for a large amount of supply to the motor. In this case, too, a substantial backflow of the current occurs as shown in Fig. 14B. Patent Document WO 2006/006257 A describes a DC-DC converter comprising a regeneration preventive circuit for turning off a synchronous rectification switch element when the output from an error amplifier is lower than the lower limit potential of a triangle wave signal or when it deviates from the voltage range of the triangle wave signal on the side where the on-time ratio of a main switch element becomes smaller. With such an arrangement, voltage rise on the input side due to regenerative operation is prevented at the time of starting in the presence of a pre-bias voltage. Furthermore, output voltage drop is prevented at the time of switching the control state from soft start state to normal operation state when the output voltage is varied due to abrupt variation in the load current or when the load current is low.

### SUMMARY OF THE INVENTION

The invention is defined by the subject-matter of the independent claims. The dependent claims are directed to advantageous embodiments.

### ADVANTAGES OF THE INVENTION

Advantageously, it is provided a low-cost DC-DC converter by reducing the backflow of current when the voltage of the output terminal is in the vicinity of a target voltage at the start-up of the DC-DC converter. In the following description, "at the start-up" means either when the DC-DC converter starts to move from a stationary state or when the DC-DC converter starts the synchronous rectification from the state in which FET 111 has the minimum on-off ratio and FET 115 is in the OFF state.

The DC-DC converter, which is connected between a DC voltage source and an energy storage, includes: a first switching element repeatedly turned on and off; a second switching element repeatedly turned on and off alternately with the first switching element; an inductance element for receiving a voltage from the DC voltage source and storing energy therein when the first switching element is in an ON state, and for charging the energy to the energy storage when the second switching element is in an ON state; a diode connected in parallel to the second switching element and in the direction in which a current flows to charge the energy storage; and a PWM control circuit for detecting the voltage of the energy storage and adjusting the on-off ratio of the first switching element so as to control the detected voltage to be a target voltage. At the start-up of the DC-DC converter, the PWM control circuit controls so that the first switching element gradually increases the on-off ratio from a minimum on-off ratio, that the second switching element is placed in an OFF state, and that the target voltage is set higher than a normal operating voltage. When the start-up operation is completed, the PWM control circuit controls so that the second switching element starts to turn on and off, and that the target voltage is returned to the normal operating voltage.

The DC-DC converter can reduce the absolute value of the backflow current by setting the target voltage higher than the normal operating voltage at the start-up. This is because the high target voltage can reduce, compared with in conventional DC-DC converters, the ON time of the second switching element when the second switching element starts to turn on and off and synchronous rectification is performed. This allows the DC-DC converter to use first and second switching elements with a low rated current, thereby achieving cost reduction.

### DETAILED DESCRIPTION OF THE DRAWINGS

Fig. 1 is a block circuit diagram of a DC-DC converter according to a first embodiment of the present invention.
Fig. 2A is a graph showing the change in the voltage of an energy storage of the DC-DC converter according to the first embodiment of the present invention with time.
Fig. 2B is a graph showing the change in the current flowing through an inductance element of the DC-DC converter according to the first embodiment of the present invention with time.
Fig. 2C is a timing chart showing a target voltage selection signal transmitted to a reference voltage source of the DC-DC converter according to the first embodiment of the present invention.
Fig. 2D is a timing chart showing an on-off operation of a first switching element of the DC-DC converter according to the first embodiment of the present invention.
Fig. 2E is a timing chart showing an on-off operation of a second switching element of the DC-DC converter according to the first embodiment of the present invention.
Fig. 3 is a block circuit diagram of a DC-DC converter according to a second embodiment of the present invention.
Fig. 4 is another block circuit diagram of the DC-DC converter according to the second embodiment of the present invention.
Fig. 5 is a block circuit diagram of a DC-DC converter according to a third embodiment of the present invention.
Fig. 6 is a block circuit diagram of a DC-DC converter according to a fourth embodiment of the present invention.
Fig. 7 is a block circuit diagram of a DC-DC converter according to a fifth embodiment of the present invention.
Fig. 8 is a block circuit diagram of a DC-DC converter according to a sixth embodiment of the present invention.
Fig. 9A is a graph showing the change in a current command value of the DC-DC converter according to the sixth embodiment of the present invention with time.
Fig. 9B is a graph showing the change in the current flowing through an inductance element of the DC-DC converter according to the sixth embodiment of the present invention with time.
Fig. 9C is a timing chart showing an on-off operation of a second switching element of the DC-DC converter according to the sixth embodiment of the present invention.
Fig. 10 is a block circuit diagram of a DC-DC converter according to a seventh embodiment of the present invention.
Fig. 11A is a graph showing the change in the voltage of an energy storage of the DC-DC converter according to the seventh embodiment of the present invention with time.
Fig. 11B is a graph showing the change in the current flowing through an inductance element of the DC-DC converter according to the seventh embodiment of the present invention with time.
Fig. 11C is a timing chart of a target voltage selection signal transmitted to a reference voltage source of the DC-DC converter according to the seventh embodiment of the present invention.
Fig. 11D is a timing chart showing an on-off operation of first selection switching elements of the DC-DC converter according to the seventh embodiment of the preset invention.
Fig. 11E is a timing chart showing an on-off operation of second selection switching elements of the DC-DC converter according to the seventh embodiment of the present invention.
Fig. 11F is a timing chart showing an on-off operation of a second switching element of the DC-DC converter according to the seventh embodiment of the present invention.
Fig. 11G is a timing chart showing an on-off operation of another second switching element of the DC-DC converter according to the seventh embodiment of the present invention.
Fig. 12 is a block circuit diagram of a conventional DC-DC converter.
Fig. 13A is a graph showing the change in the voltage of an output terminal with time at the normal start-up of the conventional DC-DC converter.
Fig. 13B is a graph showing the change in the current flowing through a coil with time at the normal start-up of the conventional DC-DC converter.
Fig. 14A is a graph showing the change in the voltage of an output terminal of the conventional DC-DC converter with time when the voltage is close to a target voltage.
Fig. 14B is a graph showing the change in the current flowing through the coil of the conventional DC-DC converter with time when the voltage of the output terminal is close to the target voltage.

### REFERENCE MARKS IN THE DRAWINGS

- 1: DC voltage source
- 1a: first DC voltage source
- 1b: second DC voltage source
- 3: energy storage
- 5: DC-DC converter
- 7: inductance element
- 9: first switching element
- 11, 11a, 11b s: econd switching element
- 13, 13a, 13b: diode
- 21: PWM control circuit
- 31: transformer
- 31a: primary winding
- 31b: secondary winding
- 31c: first secondary winding
- 31d: second secondary winding
- 33: drive switching element
- 41: current detector
- 43: current command generation circuit
- 51: selection switching element
- 53: first selection switching element
- 55: second selection switching element

### DETAILED DESCRIPTION OF PREFERRED EMBODIMENTS

The best mode of the present invention will be described as follows with reference to drawings.

### FIRST EMBODIMENT

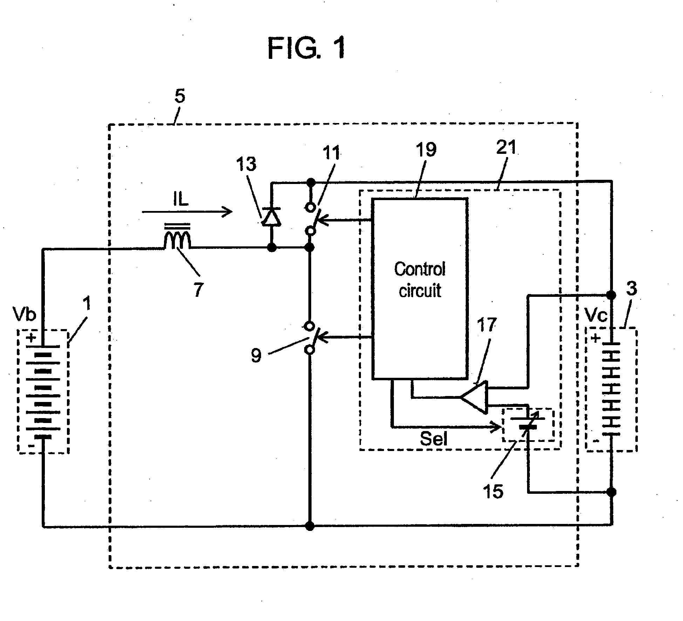

Fig. 1 is a block circuit diagram of a DC-DC converter according to a first embodiment of the present invention. The present embodiment describes the circuit structure of a boost DC-DC converter which is used to charge an energy storage by boosting the power of a DC voltage source.

In Fig. 1, DC-DC converter 5 is connected between DC voltage source 1 and energy storage 3. DC voltage source 1 is a battery, and energy storage 3 is an electric double layer capacitor.

DC-DC converter 5 includes inductance element 7, which is connected to the positive electrode of DC voltage source 1. The other end of inductance element 7 is connected to the connection point of a series circuit formed of first switching element 9 and second switching element 11, which are composed of FETs. The other end of second switching element 11 is connected to the positive electrode of energy storage 3. The other end of first switching element 9 is connected to the negative electrode of DC voltage source 1 and the negative electrode of energy storage 3. Second switching element 11 is connected in parallel to diode 13. Diode 13 is connected at its anode to inductance element 7 and at its cathode to the positive electrode of energy storage 3 so as to flow the current IL in the direction to charge energy storage 3, that is, in the direction of the arrow shown above inductance element 7 in Fig. 1. Since second switching element 11 is a FET in the present embodiment, diode 13 is a body diode of the FET.

First switching element 9 is repeatedly turned on and off, and second switching element 11 is repeatedly turned on and off alternately with first switching element 9. When first switching element 9 is in the ON state, inductance element 7 is supplied with a voltage from the DC voltage source and stores energy. The energy stored while second switching element 11 is in the ON state is charged to energy storage 3.

The series circuit formed of first and second switching elements 9 and 11 is connected to energy storage 3, and a series circuit formed of inductance element 7 and DC voltage source 1 is connected to both ends of first switching element 9. The negative electrode of DC voltage source 1 is connected to the negative electrode of energy storage 3.

The positive electrode of energy storage 3 is connected to operational amplifier 17, which detects a voltage Vc of energy storage 3 and outputs the difference between the voltage Vc and a target voltage of reference voltage source 15. Reference voltage source 15 has the function of changing its output voltage according to a target voltage selection signal Sel. The output of operational amplifier 17 is fed to control circuit 19. Control circuit 19 transmits the target voltage selection signal Sel so as to change the output voltage of reference voltage source 15 (= the output target voltage of DC-DC converter 5). Control circuit 19 then adjusts the on-off ratio of first switching element 9 so as to control the voltage Vc to be the target voltage, and alternately turns on and off first and second switching elements 9 and 11.

Reference voltage source 15, operational amplifier 17, and control circuit 19 thus described form a circuit, which is referred to as PWM control circuit 21. The output voltage of DC-DC converter 5 (which is equal to the voltage Vc of energy storage 3) is adjusted by PWM control circuit 21.

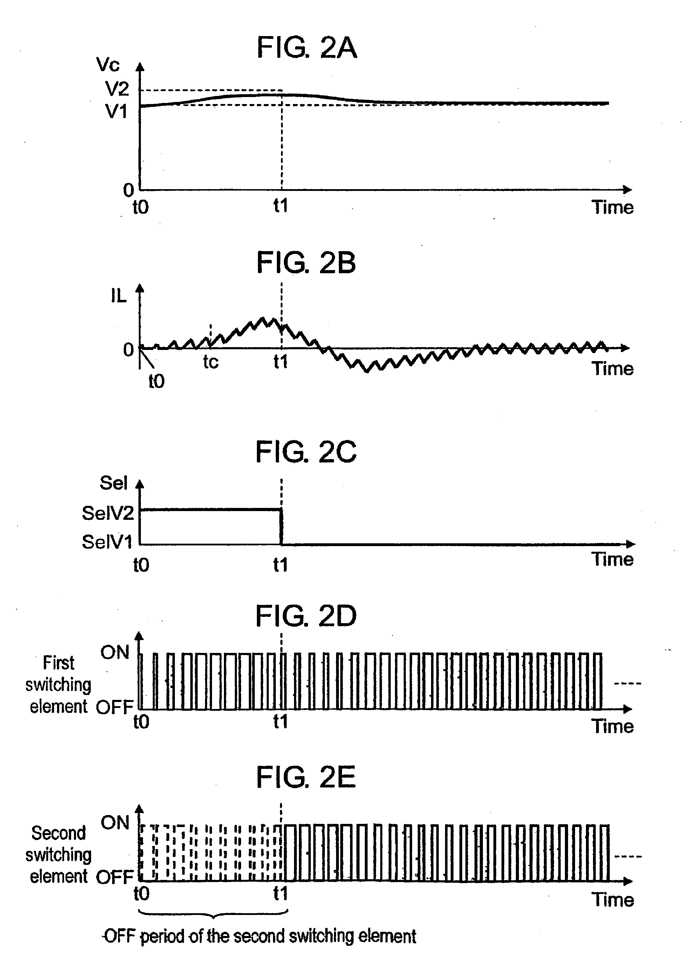

The following is a description of the operation of DC-DC converter 5. Fig. 2A is a graph showing the change in the voltage of the energy storage of the DC-DC converter of the present first embodiment with time. Fig. 2B is a graph showing the change in the current flowing through the inductance element of the DC-DC converter with time. Fig. 2C is a timing chart showing the target voltage selection signal transmitted to the reference voltage source of the DC-DC converter. Fig. 2D is a timing chart showing an on-off operation of the first switching element of the DC-DC converter. Fig. 2E is a timing chart showing an on-off operation of the second switching element of the DC-DC converter. The horizontal axes represent time t in Figs. 2A to 2E, and the vertical axes represent voltage Vc in Fig. 2A, current IL in Fig. 2B, target voltage selection signal Sel in Fig. 2C, and ON-OFF state in Figs. 2D and 2E. When the current IL flows in the direction of the arrow of Fig. 1, the direction is defined as positive.

First, at time t0, DC-DC converter 5 is started. It is assumed that the voltage Vc of energy storage 3 is already in the vicinity of a normal target voltage V1 (which is equal to the full charge voltage) as shown in Fig. 2A. At the start-up of DC-DC converter 5, control circuit 19 controls reference voltage source 15 to set a high target voltage V2, which is higher than the normal operating voltage. More specifically, as shown in Fig. 2C, control circuit 19 transmits a SelV2 signal as the target voltage selection signal Sel to reference voltage source 15 so as to make reference voltage source 16 set the high target voltage V2. In response, reference voltage source 15 sets its output voltage to the high target voltage V2.

The high target voltage V2 is defined to be higher than the normal target voltage V1 by about 5%. The reason for this is that the life of energy storage 3 is hardly affected when a voltage higher than the normal target voltage V1 by about 5% is applied for a short time (several tens of milliseconds from time t0 through t1 in the present embodiment).

When DC-DC converter 5 is started at time t0 in the circumstances, PWM control circuit 21 controls so that first switching element 9 gradually increases its on-off ratio from a minimum on-off ratio as shown in Fig. 2D, and that second switching element 11 is placed in the OFF state as shown in Fig. 2E. In Fig. 2E, the dotted lines in time t0 through t1 indicate the original operation of DC-DC converter 5; however, the original operation is forcibly stopped. As a result, there is no large backflow of current as shown in time t0 through t1 of Fig. 2B, allowing energy storage 3 to be charged to reach the high target voltage V2. The high target voltage V2, which is set higher than the normal target voltage V1, allows the current to always flow in the direction of charging energy storage 3 even when the voltage Vc of energy storage 3 is close to the full charge voltage (= V1). This is shown in Fig. 2B. The charging current gradually increases from 0, and at time tc, the current IL of inductance element 7 enters the continuous mode in which the current IL is not 0. In this mode, first switching element 9 and diode 13 are alternately turned on and off, having almost no time to be in the OFF state simultaneously. As a result, the voltage Vc of energy storage 3 increases with time to reach the high target voltage V2.

At time t1, the start-up operation of DC-DC converter 5 is completed. PWM control circuit 21 makes second switching element 11 start to turn on and off alternately with first switching element 9 as shown in Figs. 2D and 2E. PWM control circuit 21 then switches the target voltage selection signal Sel to a SelV1 signal as shown in Fig. 2C so as to resume the normal target voltage V1. In response, reference voltage source 15 sets the voltage Vc to the normal target voltage V1. In this case, the ON period of second switching element 11 is equal to the OFF period of first switching element 9 (corresponding to the period during which diode 13 is in the ON state until immediately before time t1). Fig. 1 indicates that the voltage to be applied to inductance element 7 is the same whether second switching element 11 is ON or diode 13 is ON, and therefore, the waveform of the voltage applied to inductance element 7 does not change between before and after time t1. Hence, there is no sudden change in the current IL

This is shown from time t1 onward in Figs. 2A and 2B. First, as shown in Fig. 2A, the voltage Vc gradually decreases and becomes stable when it reaches the normal target voltage V1. In this period, second switching element 11 has a long ON time in order to make the voltage Vc closer to the normal target voltage V1 as shown in Fig. 2E, and the current IL flowing through inductance element 7 decreases from time t1 and once becomes negative as shown in Fig. 2B. The current IL, however, increases as the voltage Vc approaches the normal target voltage V1. When the voltage Vc reaches the normal target voltage V1, first and second switching elements 9 and 11 have the same on-off ratio and the current IL is stabilized as shown in Figs. 2D and 2E.

In the aforementioned conventional DC-DC converter, immediately before time t1, FET 115 and diode 117 are almost in the OFF state, and the current IL has a value of almost zero. From time t1 onward in which FET 115 is in the ON state, a large reverse current flows.

In the DC-DC .converter according to the present embodiment, on the other hand, immediately before time t1, diode 13 is in the ON state because current is flowing through energy storage 3. Turning on second switching element 11 in this situation causes no significant change. Therefore, the maximum absolute value of the current IL is smaller in the present embodiment (Fig. 2B) than in the conventional DC-DC converter (Fig, 14B). This allows first and second switching elements 9 and 11 to have a low rated current, thereby achieving cost reduction.

Furthermore, in the conventional DC-DC converter, as shown in Fig. 14A, from time t1, the voltage Vc goes far off the normal target voltage V1 and takes long time to return. In the DC-DC converter of the present embodiment, on the other hand, as shown in Fig. 2A, the voltage Vc returns to the normal target voltage V1 and is stabilized at an extremely early time.

The reason for the small fluctuation of the current IL is as follows. In the conventional DC-DC converter, as shown in Fig. 14B, the voltage Vc reaches the target voltage V1 before time t1, so that first switching element 9 has an extremely short ON time in which the current IL hardly flows. When starting to turn on and off at time t1 in this situation, second switching element 11 has an extremely long ON time. This causes a large current flow from energy storage 3 to DC voltage source 1, making the current IL flowing through inductance element 7 a large negative current. Therefore, as shown in Fig. 14A, the voltage Vc largely decreases and becomes unstable by a large amount of current supplied from energy storage 3.

In the DC-DC converter according to the present embodiment, on the other hand, the voltage Vc of energy storage 3 never exceeds the normal target voltage V1 at the start-up. This enables the on-off ratio of first switching element 9 to gradually increase from the minimum on-off ratio at the start-up by setting the voltage Vc to the high target voltage V2. In this case, the amount of change in the required on-off ratio can be reduced if first switching element 9 and diode 13 are continuously turned on and off alternately by increasing the current IL of inductance element 7 in the positive direction until entering the continuous mode in which the current IL is always positive. The increment of the current IL of inductance element 7 is also reduced, thereby reducing the amount of charge to energy storage 3. As a result, second switching element 11 is turned on at time t1, and the voltage Vc of energy storage 3 is returned from the high target voltage V2 to the normal target voltage V1. Even so, as described above, the amount of charge to energy storage 3 is small, so that the amount of discharge of energy storage 3 required to return the voltage Vc to the normal target voltage V1 is also small. Thus, the current IL is stabilized after small fluctuations as shown in Fig. 2B without becoming a large negative current as shown in Fig. 14B. In this manner, fluctuation of the current IL is reduced.

As described hereinbefore, the magnitude of the backflow current IL can be reduced by setting the voltage Vc of energy storage 3 to the high target voltage V2 at a start-up, even if the voltage Vc is in the vicinity of the normal target voltage V1, thereby achieving a low-cost DC-DC converter.

In the present embodiment, the high target voltage V2 is selected at the start-up regardless of the magnitude of the voltage Vc of energy storage 3. There is no operational difference between setting to the normal target voltage V1 and setting to the high target voltage V2 when the voltage Vc is low at the start-up. Therefore, the high target voltage V2 is always selected at the start-up in order to simplify the control of control circuit 19.

In the present embodiment, the magnitude of the high target voltage V2 is set greater than the normal target voltage V1 by about 5%. The magnitude of the high target voltage V2 can be set at other values as long as the current IL flowing through inductance element 7 enters the continuous mode before time t1 after the DC-DC converter is started from the state in which the voltage Vc of energy storage 3 is at almost full charge voltage (= V1).

### SECOND EMBODIMENT

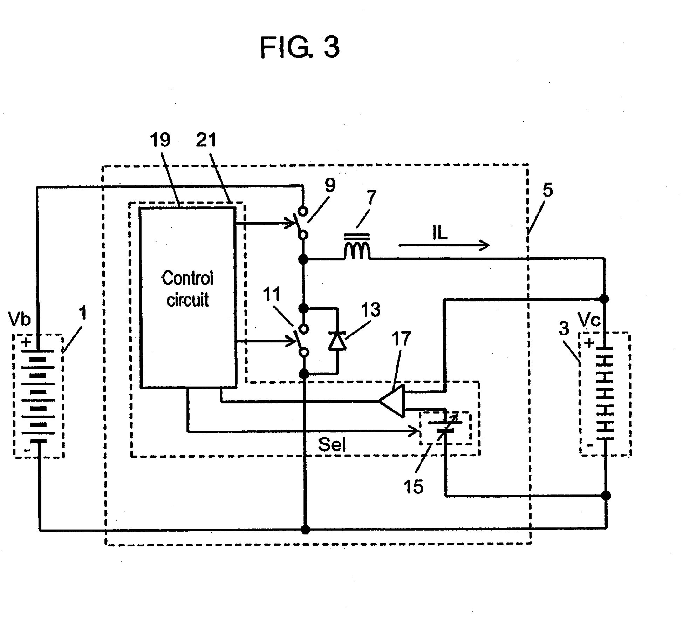

Fig. 3 is a block circuit diagram of a DC-DC converter according to a second embodiment of the present invention. In Fig. 3, like components are labeled with like reference numerals with respect to Fig. 1, and these components are not described again. DC-DC converter 5 of the present embodiment is a step-down DC-DC converter. DC voltage source 1 is connected to a series circuit formed of first and second switching elements 9 and 11. Second switching element 11 is connected at both ends with a series circuit formed of inductance element 7 and energy storage 3. DC voltage source 1 and energy storage 3 are connected at their negative electrodes. This structure enables the voltage Vb of DC voltage source 1 to step down so as to charge energy storage 3. Diode 13 is connected at its anode to the negative electrode of DC voltage source 1 and at its cathode to inductance element 7 so as to flow the current in the direction to charge energy storage 3 (in the direction of the arrow shown in Fig. 3).

DC-DC converter 5 thus structured operates exactly in the same manner as in the first embodiment. More specifically, reference voltage source 15 sets the voltage Vc to the high target voltage V2 at the start-up, and switches it to the normal target voltage V1 at time t1. Thus, in the same manner as in the first embodiment, the fluctuations of the current IL flowing through inductance element 7 are reduced after the voltages are switched from one to the other, thereby achieving low-cost DC-DC converter 5.

With the above-described structure and operation, the magnitude of the backflow current IL can be reduced by setting the voltage Vc to the high target voltage V2 at the start-up, thereby achieving a low-cost step-down DC-DC converter.

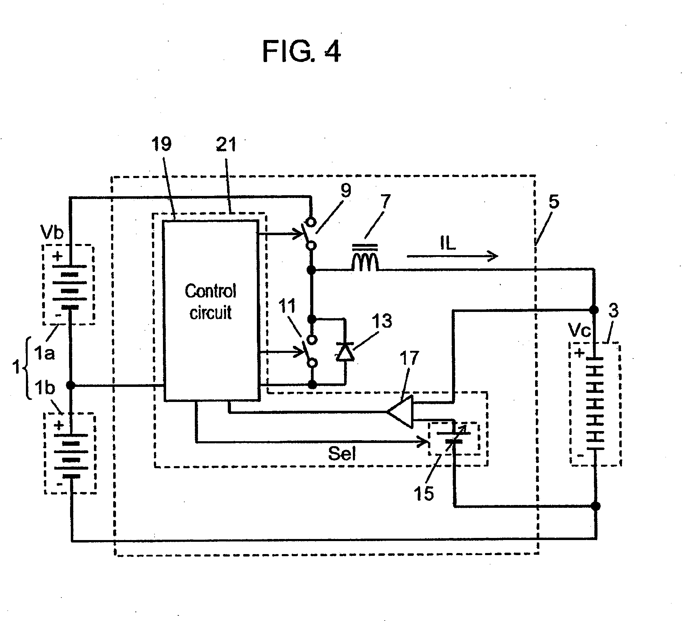

Fig. 4 is another block circuit diagram of the DC-DC converter according to the present second embodiment. DC-DC converter 5 shown in Fig. 4 differs from that shown in Fig. 3 as follows.
1) DC voltage source 1 is a series circuit formed of first DC voltage source 1a and second DC voltage source 1b. The series circuit is formed by connecting the negative electrode of first DC voltage source 1a to the positive electrode of second DC voltage source 1b.
2) First DC voltage source 1a is connected to the series circuit formed of first and second switching element 9 and 11.
3) Inductance element 7, energy storage 3, and second DC voltage source 1b form a series circuit, which is connected to both ends of second switching element 11.

With this structure, the magnitude of the backflow current IL can be reduced by the same operation as in Fig. 3, thereby achieving a low-cost DC-DC converter.

### THIRD EMBODIMENT

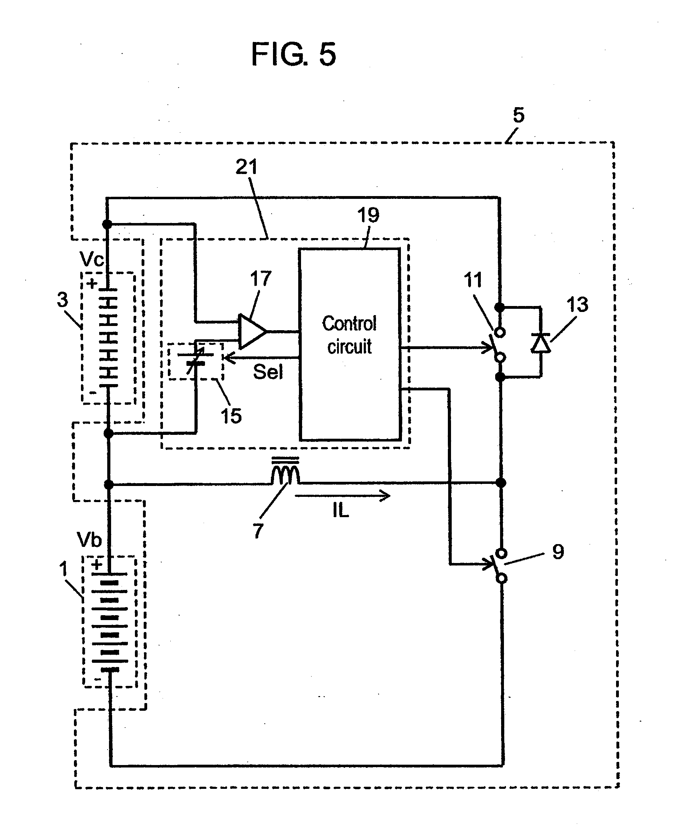

Fig. 5 is a block circuit diagram of a DC-DC converter according to a third embodiment of the present invention. In Fig. 5, like components are labeled with like reference numerals with respect to Fig. 1, and these components are not described again.

DC-DC converter 5 of the present embodiment is an inverting DC-DC converter. First switching element 9 and DC voltage source 1 form a series circuit, which is connected to both ends of inductance element 7. Second switching element 11 and energy storage 3 form a series circuit, which is connected to both ends of inductance element 7. The positive electrode of DC voltage source 1 is connected to the negative electrode of energy storage 3. Diode 13 is connected at its anode to inductance element 7 and at its cathode to the positive electrode of energy storage 3 so as to flow the current in the direction to charge energy storage 3 (in the direction of the arrow shown in Fig. 5).

The negative electrode of energy storage 3 is connected to the positive electrode of DC voltage source 1. Therefore, DC-DC converter 5 can be applied to the case in which a vehicle has a load (an unillustrated starter or an unillustrated electric power steering) that consumes a large amount of current intermittently and a load (unillustrated electrical components such as audio components or lighting components) that consumes current steadily. In this case, the intermittent consumption of a large amount of current decreases the voltage Vb of DC voltage source 1, and energy storage 3 supplies power to the load to compensate the decrease so as to stabilize the supply voltage. When the consumption of the large amount of current is over, energy storage 3 is charged in preparation for the consumption of a large amount of current next time.

DC-DC converter 5 thus structured operates exactly in the same manner as in the first embodiment. More specifically, reference voltage source 15 sets the voltage Vc to the high target voltage V2 at the start-up, and switches it to the normal target voltage V1 at time t1. Thus, in the same manner as in the first embodiment, the fluctuations of the current IL flowing through inductance element 7 are reduced after the voltages are switched from one to the other, thereby achieving low-cost DC-DC converter 5.

With the above-described structure and operation, the magnitude of the backflow current IL can be reduced by setting the voltage Vc to the high target voltage V2 at the start-up, thereby achieving a low-cost inverting DC-DC converter.

### FOURTH EMBODIMENT

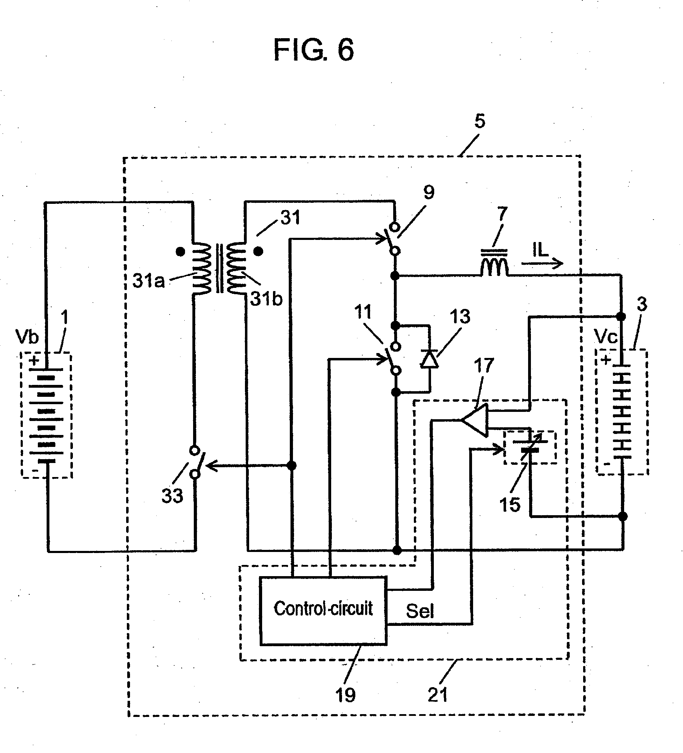

Fig. 6 is a block circuit diagram of a DC-DC converter according to a fourth embodiment of the present invention. The DC-DC converter is a forward DC-DC converter. In Fig. 6, like components are labeled with like reference numerals with respect to Fig. 3, and these components are not described again in detail. The fourth embodiment has the following structural features.
1) DC voltage source 1 is connected at both ends with a series circuit formed of primary winding 31a of transformer 31 and drive switching element 33. Drive switching element 33 is connected to DC voltage source 1 with primary winding 31a connected therebetween.
2) Transformer 31 includes secondary winding 31b, which is connected at both ends with a series circuit formed of first and second switching elements 9 and 11.
3) Drive switching element 33 is connected to control circuit 19 so as to be turned on and off synchronously with first switching element 9.

DC-DC converter 5 thus structured operates basically in the same manner as in the first embodiment shown in Figs. 2A to 2E.

Drive switching element 33, which is turned on and off synchronously with first switching element 9, performs an on-off operation as shown in the timing chart of Fig. 2D. In other words, from time t0 through t1, first switching element 9 and drive switching element 33 are turned on and off simultaneously. Therefore, when drive switching element 33 is turned on, the voltage of DC voltage source 1 is applied to primary winding 31a of transformer 31. In response, secondary winding 31b generates a voltage. Since first switching element 9 is also in the ON state at this moment, the voltage generated in secondary winding 31b is applied to inductance element 7 so as to store energy therein.

When first switching element 9 and drive switching element 33 are turned on, the voltage of DC voltage source 1 is indirectly applied to inductance element 7. Therefore, DC-DC converter 5 of the present embodiment operates substantially in the same manner as in the structure of Fig. 3 (the non-isolated step-down DC-DC converter). As shown in Fig. 2C, control circuit 19 controls the target voltage selection signal Sel to be the SelV2 signal at the start-up so as to set the output voltage of reference voltage source 15 to the high target voltage V2. At time t1 when the start-up operation is completed, control circuit 19 switches the target voltage selection signal Sel from the SelV2 signal to the SelV1 signal so as to set the output voltage of reference voltage source 15 to the normal target voltage V1. These settings reduce the maximum absolute value of the current IL from time t1 onward as shown in Fig. 2B, thereby reducing the cost of first and second switching elements 9 and 11 and stabilizing the voltage Vc as shown in Fig. 2A.

With the above-described structure and operation, the magnitude of the backflow current IL can be reduced by setting the voltage Vc to the high target voltage V2 at the start-up, thereby achieving a low-cost forward DC-DC converter.

### FIFTH EMBODIMENT

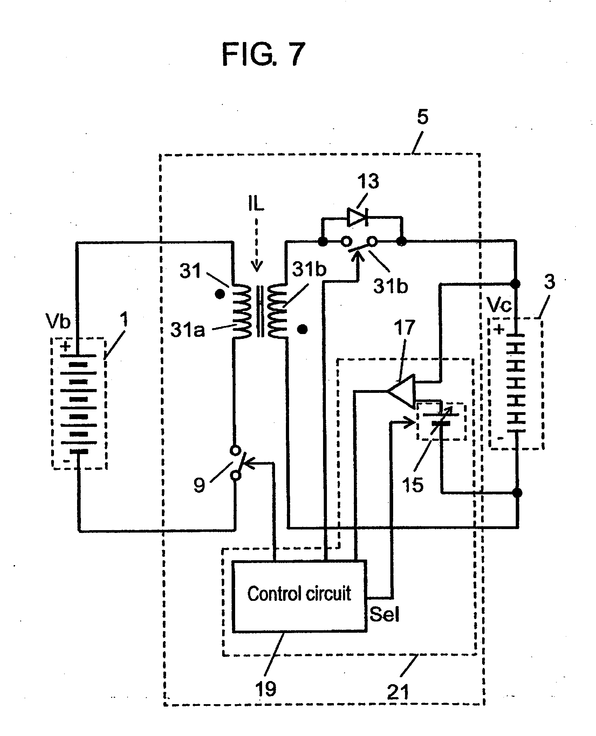

Fig. 7 is a block circuit diagram of a DC-DC converter according to a fifth embodiment of the present invention. The DC-DC converter is a flyback DC-DC converter. In Fig. 7, like components are labeled with like reference numerals with respect to Fig. 6, and these components are not described again in detail. The fifth embodiment has the following structural features.
1) DC voltage source 1 is connected at both ends with a series circuit formed of primary winding 31a of transformer 31 and first switching element 9. DC voltage source 1 is connected to first switching element 9 with primary winding 31a connected therebetween.
2) Secondary winding 31b of transformer 31 is connected at both ends with a series circuit formed of second switching element 11 and energy storage 3.
3) Inductance element 7 is not provided. In the present embodiment, transformer 31 serves as inductance element 7. The excitation current of the transformer in the present embodiment corresponds to the current IL of inductance element 7.

DC-DC converter 5 thus structured operates basically in the same manner as shown in Figs. 2A to 2E.

When first switching element 9 is turned on, the voltage of DC voltage source 1 is applied to primary winding 31a of transformer 31. In response, secondary winding 31b generates a voltage. Because of the absence of inductance element 7, energy is stored in transformer 31.

Thus, energy is stored in transformer 31 when first switching element 9 is turned on and charged in energy storage 3 when either second switching element 11 or diode 13 is turned on. As shown in Fig. 2C, control circuit 19 switches the output voltage of reference voltage source 15 from the high target voltage V2 to the normal target voltage V1 at time t1, thereby reducing the maximum absolute value of the current IL from time t1 onward as shown in Fig. 2B. This reduces the cost of first and second switching elements 9 and 11, thereby stabilizing the voltage Vc as shown in Fig. 2A. The absence of inductance element 7 reduces the DC-DC converter, compared with the fourth embodiment.

With the above-described structure and operation, the magnitude of the backflow current IL can be reduced by setting the voltage Vc to the high target voltage V2 at the start-up, thereby achieving a low-cost forward DC-DC converter.

### SIXTH EMBODIMENT

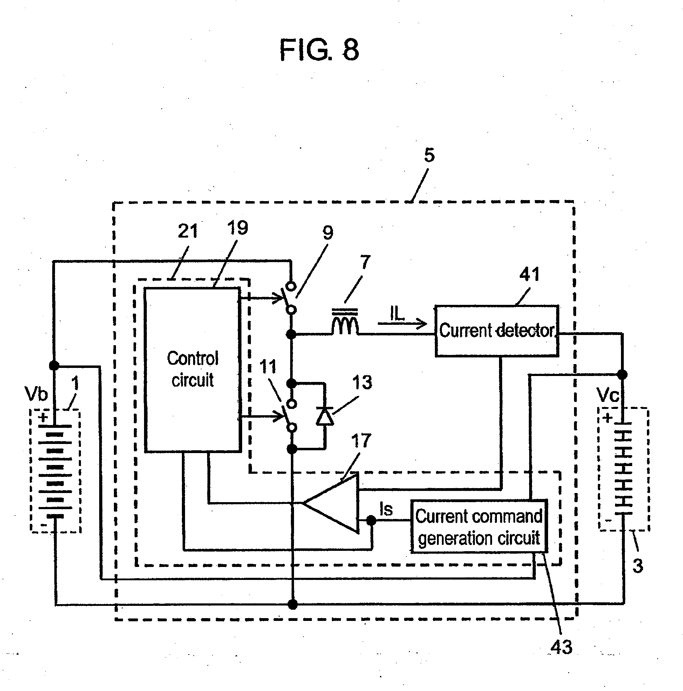

Fig. 8 is a block circuit diagram of a DC-DC converter according to a sixth embodiment of the present invention. The DC-DC converter is a step-down DC-DC converter as in the second embodiment shown in Fig. 3. In Fig. 8, like components are labeled with like reference numerals with respect to Fig. 3, and these components are not described again in detail. The sixth embodiment has the following structural features.
1) The DC-DC converter includes current detector 41 for detecting the current IL between inductance element 7 and energy storage 3, that is, on the output side of DC-DC converter 5. The current output signal of current detector 41 is fed to operational amplifier 17.
2) The DC-DC converter further includes current command generation circuit 43 connected to operational amplifier 17. Current command generation circuit 43 generates a current command value Is determined based on the voltage Vb of DC voltage source 1 and the voltage Vc of energy storage 3. This allows control circuit 19 to change the on-off ratio of first and second switching elements 9 and 11 so as to adjust the current IL detected by current detector 41. The current command value Is is also fed to control circuit 19.

DC-DC converter 5 thus structured operates as follows. In the second embodiment, PWM control circuit 21 detects the voltage Vc of energy storage 3 and controls it to be the target voltage. In the present sixth embodiment, on the other hand, PWM control circuit 21 adjusts the on-off ratio according to the current command value Is.

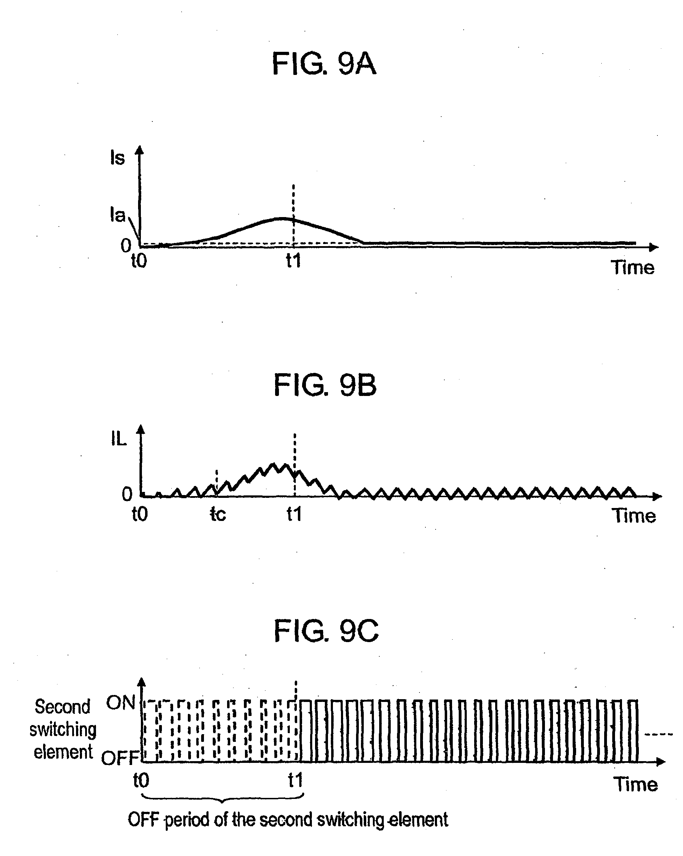

Fig. 9A is a graph showing the change in the current command value of the DC-DC converter according to the present embodiment with time. Fig. 9B is a graph showing the change in the current flowing through the inductance element of the DC-DC converter with time. Fig. 9C is a timing chart showing the on-off operation of the second switching element of the DC-DC converter.

At the start-up, in the second embodiment, the target voltage is set higher than the normal operating voltage. In the present sixth embodiment, on the other hand, current command generation circuit 43 generates the current command value Is so that the minimum value in one cycle of the current IL can be greater than zero amperes. More specifically, current command generation circuit 43 outputs the current command value Is determined based on the voltage Vb of DC voltage source 1 and the voltage Vc of energy storage 3 in such a manner as to increase with time from time t0 onward as shown in Fig. 9A. This results in a change in the on-off ratio that is outputted from control circuit 19. At the start-up, second switching element 11 is forced into the OFF state as shown in Fig. 9C in the same manner as in the second embodiment. This means that, at the start-up, only first switching element 9 performs an on-off operation (in the same timing as shown in the timing chart of Fig. 2C), so that the current IL flowing through inductance element 7 gradually increases as shown in Fig. 9B. As a result, the minimum value of the current IL in one cycle from time tc onward becomes greater than zero amperes.

When the start-up operation is completed, in the second embodiment, the target voltage is returned to the normal operating voltage. In the present sixth embodiment, on the other hand, when equal to or greater than a specified current value, the current command value Is is set to a target current value Ia so as to start the on-off operation of second switching element 11. More specifically, control circuit 19 reads the current command value Is and determines that the start-up operation is completed when the present current command value Is becomes equal to or greater than the specified current value. The specified current value is previously stored as the current command value Is used when it is certain that the minimum value of the current IL in one cycle is greater than zero amperes. This allows control circuit 19 to determine the time when the current command value Is exceeds the specified current value. As shown in Fig. 9A, the current command value Is is set high enough to ensure the detection of the time when the minimum value of the current IL in one cycle exceeds zero amperes.

At time t1 when the start-up operation is completed, as shown in Fig. 9A, current command generation circuit 43 decreases the current command value Is to the target current value Ia with time. At the same time, as shown in Fig. 9C, current command generation circuit 43 starts to turn second switching element 11 on and off. This gradually decreases the current IL as shown in Fig. 9B, and the mean value of the current IL in one cycle is controlled to be the target current value Ia.

As a result, as shown in Fig. 9B, the maximum absolute value of the current IL from time t1 onward becomes further smaller than in Fig. 2B, further reducing the cost of first and second switching elements 9 and 11.

With the above-described structure and operation, the magnitude of the backflow current IL can be reduced by controlling to increase or decrease the current IL to energy storage 3 instead of changing the target voltage of energy storage 3, thereby achieving a low-cost DC-DC converter.

In the present embodiment, time t1 when the start-up operation is completed is determined to be the time when the current command value Is becomes equal to or greater than the specified current value. If current detector 41 has high precision, it is possible to directly determine the moment (time tc) when the minimum value of the current IL in one cycle exceeds zero amperes. In this case, the output of current detector 41 can be fed to control circuit 19 instead of the current command value Is.

The structure of the present sixth embodiment can be applied to the boost DC-DC converter of the first embodiment, the forward DC-DC converter of the fourth embodiment, and the flyback DC-DC converter of the fifth embodiment.

In the present embodiment, current detector 41 is arranged so as to detect the current IL of the output of DC-DC converter 5. Alternatively, current detector 41 can be arranged so as to detect the current flowing through any of the input of DC-DC converter 5, inductance element 7, primary winding 31a, and secondary winding 31b of transformer 31.

### SEVENTH EMBODIMENT

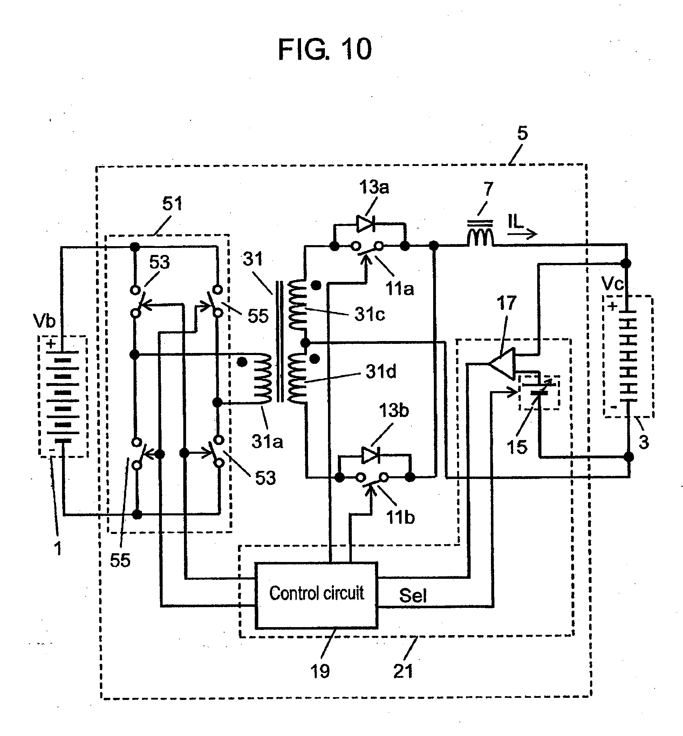

Fig. 10 is a block circuit diagram of a DC-DC converter according to a seventh embodiment of the present invention. The DC-DC converter is a full-bridge DC-DC converter. In Fig. 10, like components are labeled with like reference numerals with respect to Figs. 6 and 7, and these components are not described again in detail. The seventh embodiment has the following structural features in comparison with the structure of the fifth embodiment shown in Fig. 7.
1) First switching element 9 is replaced by selection switching element 51 arranged between DC voltage source 1 and primary winding 31a of transformer 31. Selection switching element 51 is connected at its input to DC voltage source 1 and at its output to primary winding 31a.
2) Transformer 31 includes two series-connected secondary windings: first secondary winding 31c and second secondary winding 31d.
3) Inductance element 7 is connected to the positive electrode of energy storage 3.
4) The connection point between first secondary winding 31c and second secondary winding 31d is connected to the negative electrode of energy storage 3.
5) The DC-DC converter includes second switching element 11a connected between inductance element 7 and the end of first secondary winding 31c that is on the other side of the connection point. Second switching element 11a is connected in parallel to diode 13a.
6) The DC-DC converter also includes second switching element 11b connected between inductance element 7 and the end of second secondary winding 31d that is on the other side of the connection point. Second switching element 11b is connected in parallel to diode 13b.

The structure of selection switching element 51 is described in detail as follows. Selection switching element 51 includes two first selection switching elements 53 and two second selection switching elements 55, which are connected as follows.

The input of selection switching element 51 connected to DC voltage source 1 is connected to a series circuit formed of one of the two first selection switching elements 53 and one of the two second selection switching elements 55. The input of selection switching element 51 is further connected to a series circuit formed of the other second selection switching element 55 and the other first selection switching element 53. The connection point between first selection switching element 53 and second selection switching element 65 of each of the two series circuits becomes the output of selection switching element 51 and is connected to primary winding 31a.

First selection switching elements 53 and second selection switching elements 55, which are composed of FETs, are turned on and off under the control of control circuit 19. Two first selection switching elements 53 and two second selection switching elements 55 are connected in such a manner that two first selection switching elements 53 are turned on and off simultaneously, and two second selection switching elements 55 are turned on and off simultaneously. Therefore, in Fig. 10, when two first selection switching elements 53 are turned on, the voltage Vb of DC voltage source 1 is outputted in the forward direction to primary winding 31a. When two second selection switching elements 55 are turned on, on the other hand, the voltage Vb of DC voltage source 1 is outputted in the reverse direction to primary winding 31a. When two first selection switching elements 53 and two second selection switching elements 55 are all turned off, the output can be opened.

Thus, selection switching element 51 can select whether the voltage of DC voltage source 1 should be outputted in the forward direction or the reverse direction, or the output is opened, according to the on-off combination of first selection switching elements 53 and second selection switching element 55.

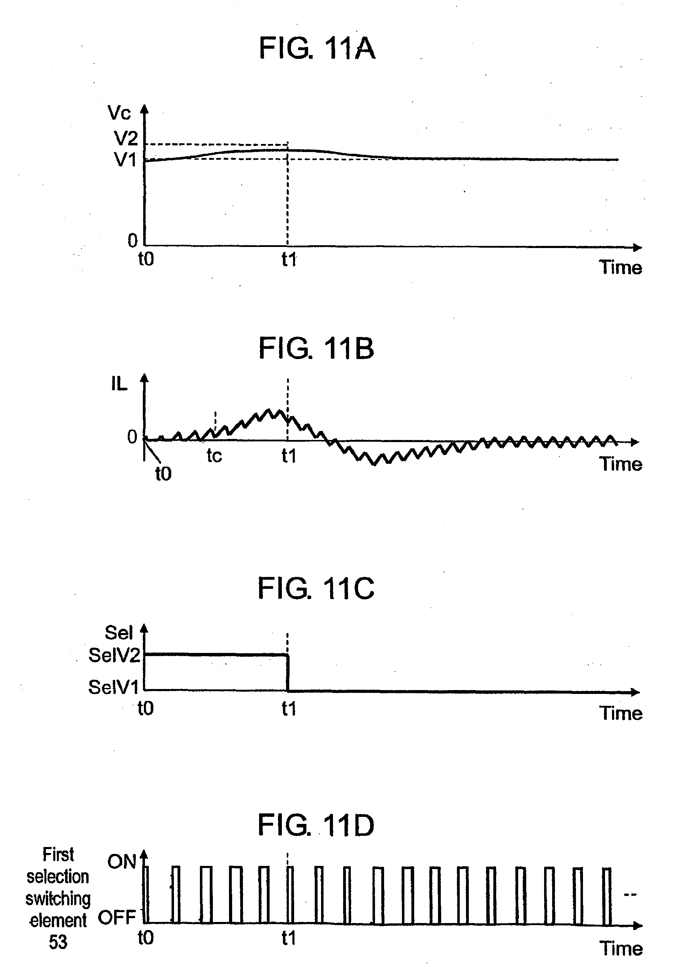

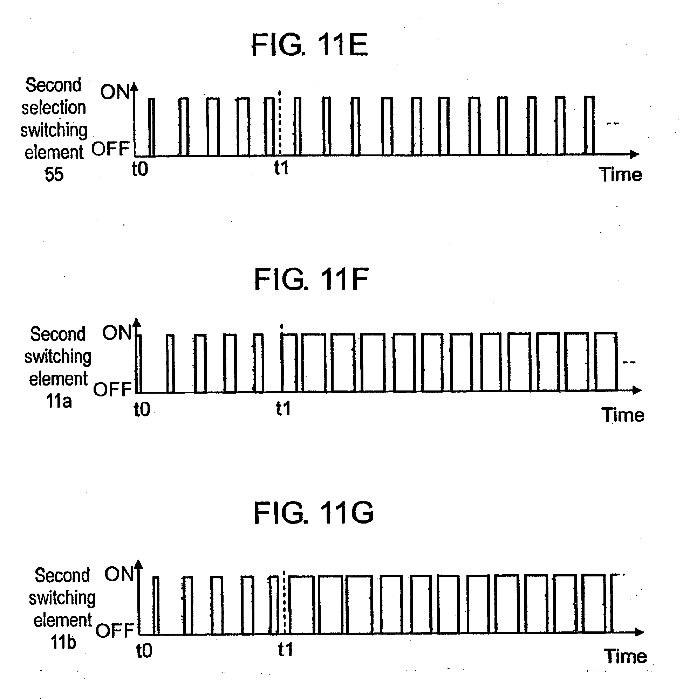

DC-DC converter 5 thus structured operates as follows. Fig. 11A is a graph showing the change in the voltage of the energy storage of the DC-DC converter of the present seventh embodiment with time. Fig. 11B is a graph showing the change in the current flowing through the inductance element of the DC-DC converter with time. Fig. 11C is a timing chart of the target voltage selection signal transmitted to the reference voltage source of the DC-DC converter. Fig. 11D is a timing chart showing the on-off operation of the first selection switching elements of the DC-DC converter. Fig. 11E is a timing chart showing the on-off operation of the second selection switching elements of the DC-DC converter. Fig. 11F is a timing chart showing the on-off operation of the second switching element of the DC-DC converter. Fig. 11G is a timing chart showing the on-off operation of another second switching element of the DC-DC converter.

From time t0 through t1 in which the DC-DC converter is started, as shown Fig. 11C, PWM control circuit 21 sets the target voltage of reference voltage source 15 to the high voltage V2, which is higher than the normal operating voltage. As a result, DC-DC converter 5 controls the output voltage to be the voltage V2. As shown in Fig. 11F, PWM control circuit 21 turns on second switching element 11a connected to first secondary winding 31c in synchronization with the time when the forward direction is selected by selection switching element 51, that is, when first selection switching elements 53 are ON as shown in Fig. 11D.

As shown in Figs. 11F and 11G, PWM control circuit 21 turns off both second switching elements 11a and 11b in synchronization with the time when the output of selection switching element 51 is opened, that is, when both of first selection switching elements 53 and second selection switching elements 55 are OFF as shown in Figs. 11D and 11E. At this moment, the current IL flowing through inductance element 7 is divided by two diodes 13a and 13b. Diodes 13a and 13b prevent backflow of the current IL.

As shown in Fig. 11G, PWM control circuit 21 turns on second switching element 11b connected to second secondary winding 31d in synchronization with the time when the reverse direction is selected by selection switching element 51, that is, when second selection switching elements 55 are ON as shown in Fig. 11E.

Thus, at the start-up, first selection switching elements 53 and second switching element 11a are synchronously turned on and off, and second selection switching elements 55 and second switching element 11b are synchronously turned on and off so that the voltage Vc of energy storage 3 becomes the voltage V2. This gradually increases the current IL flowing through inductance element 7 as shown in Fig. 11B, allowing the voltage Vc to approach the voltage V2 as shown in Fig. 11A. These behaviors are identical to those shown in Figs. 2B and 2A, and are therefore not described in detail again.

At time t1 when the start-up operation is completed, PWM control circuit 21 sets the target voltage of reference voltage source 15 to the normal operating voltage V1 as shown in Fig. 11C. As a result, DC-DC converter 5 controls the output voltage to be the voltage V1. In this case, PWM control circuit 21 controls the turning on and off of second switching element 11b connected to second secondary winding 31d in such a manner that second switching element 11b is OFF when the forward direction is selected by selection switching element 51, that is, when first selection switching element 53 is ON as shown from time t1 onward of Fig. 11D (see Fig. 11G). At the same time, PWM control circuit 21 controls the turning on and off of second switching element 11a connected to first secondary winding 31c in such a manner that second switching element 11a is OFF when the reverse direction is selected by selection switching element 51, that is, when second selection switching element 55 is ON as shown from time t1 onward of Fig. 11E (see Fig. 11G).

Thus, immediately before time t1, the current IL is positive as shown in Fig. 11B, and in the period during which second switching elements 11a and 11b are both in the OFF state, diodes 13a and 13b are in the ON state. Therefore, even if selection switching element 51 or second switching elements 11a and 11b are turned on and off as described above from time t1 onward, there is no operational change because when second switching elements 11a and 11b are both in the ON state, diodes 13a and 13b are in the ON state. As a result, there is no large backflow of current.

The repetition of these operations cause the current IL flowing through inductance element 7 to once decrease as shown in Fig. 11B; however, the magnitude of the backflow current IL can be reduced because the absolute value is smaller than in the conventional structure. After this, the current IL gradually approaches zero amperes. As a result, as shown in Fig. 11A, the voltage Vc of energy storage 3 approaches the voltage V1 with time and is finally stabilized at the voltage V1. These behaviors are identical to those shown in Figs. 2B and Fig. 2A, and are therefore not described in detail again.

With the above-described structure and operation, the magnitude of the backflow current IL can be reduced by setting the voltage Vc to the high target voltage V2 at the start-up, thereby achieving a low-cost full-bridge DC-DC converter.

The present embodiment has the function of making the output of selection switching element 51 open. Alternatively, it may have the function of making the output 0 volts. In this case, two first selection switching elements 53 and two second selection switching elements 55 are connected to control circuit 19 in such a manner as to be turned on and off independently. When first selection switching element 53 and second selection switching element 55 on the upper side of Fig. 10 are in the ON state, first selection switching element 53 and second selection switching element 55 on the lower side of Fig. 10 can be placed in the OFF state and vise versa. This means that the output of selection switching element 51 is short-circuited, thus allowing outputting 0 volts:

In the present seventh embodiment, the output target voltage of DC-DC converter 5 is set higher than the normal operating voltage at the start-up, and is returned to the normal target voltage when the start-up operation is completed. Alternatively, in the same manner as the sixth embodiment, DC-DC converter 5 of the present seventh embodiment may include a current detector and a current command generation circuit so that a current command value is generated in such a manner that the minimum value of the current in one cycle is greater than zero amperes at the start-up, and the current command value is set to the target current value when the start-up operation is completed. Two second switching elements 11a and 11b of the present embodiment are controlled as shown in Figs. 11F and 11G, respectively.

In the present seventh embodiment, second switching elements 11a and 11b are connected in parallel to diodes 13a and 13b, respectively. Alternatively, as described in the first embodiment, second switching elements 11a and 11b can be FETs, and diodes 13a and 13b can be body diodes.

In the present seventh embodiment, second switching elements 11a and 11b are on-off controlled from time t0 through t1 at the start-up, but may alternatively be placed in the OFF state only at the start-up. The operation in this case is substantially the same as in Figs. 11F and 11F because diode 13a is tuned on and off synchronously with the turning on and off of first selection switching element 53, and diode 13b is turned on and off synchronously with the turning on and off of second selection switching element 55. Therefore, as described above, the operation of turning on second switching element 11a synchronously with the time when the forward direction is selected by selection switching element 51 is the same as the case where second switching elements 11a and 11b are on-off controlled from time t0 through t1 at the start-up because diode 13a is in the ON state if second switching element 11a is not in the ON state.

In the first to seventh embodiments, energy storage 3 is an electric double layer capacitor, but alternatively can be other capacitors such as an electrochemical capacitor or a secondary battery.

### INDUSTRIAL APPLICABILITY

The DC-DC converter according to the present invention, which has been reduced in cost by reducing the magnitude of the backflow current after started, is suitable as a DC-DC converter that converts an input DC voltage into an arbitrary target voltage to be used as the power source of a vehicle or as an emergency power source which require an energy storage.

## Claims

1. A DC-DC converter (5) connectable between a DC voltage source (1) and an energy storage (3), comprising:
a first switching element (9) repeatedly turned on and off;
a second switching element (11) repeatedly turned on and off alternately with the first switching element (9);
an inductance element (7) for receiving a voltage from the DC voltage source (1) and storing energy therein when the first switching element (9) is in an ON state, and for charging the energy to the energy storage (3) when the second switching element (11) is in an ON state;
a diode (13) connected in parallel to the second switching element (11) and in a direction in which a current flows to charge the energy storage (3); and
a PWM control circuit (21) for detecting a voltage of the energy storage (3) and adjusting an on-off ratio of the first switching element (9) so as to control the detected voltage o be a target voltage;
**characterized in that**:
at a start-up of the DC-DC converter (5), the PWM control circuit (21) controls so that the first switching element (9) gradually increases the on-off ratio from a minimum on-off ratio, that the second switching element (11) is placed in an OFF state, and that the target voltage is set higher than a normal operating voltage,
when a start-up operation is completed, the PWM control circuit (21) controls so that the second switching element (11) starts to turn on and off, and that the target voltage is returned to the normal operating voltage; and
the start-up means either when the DC-DC converter (5) starts to move from a stationary state or when the DC-DC converter (5) starts synchronous rectification from a state in which the first switching element (9) has a minimum on-off ratio and the second switching element (11) is in the off state.

2. The DC-DC converter (5) of claim 1, wherein when the DC-DC converter (5) is connected between the DC-voltage source (1) and the energy storage (3):
the first switching element (9) and the second switching element (11) form a series circuit connected to the energy storage (3), and
the inductance element (7) and the DC voltage source (1) form a series circuit connected to both ends of the first switching element (9).

3. The DC-DC converter (5) of claim 1, wherein when the DC-DC converter (5) is connected between the DC-voltage source (1) and the energy storage (3):
the first switching element (9) and the second switching element (11) form a series circuit connected to the DC voltage source (1), and
the inductance element (7) and the energy storage (3) form a series circuit connected to both ends of the second switching element (11).

4. The DC-DC converter (5) of claim 1, wherein when the DC-DC converter (5) is connected between the DC-voltage source (1) and the energy storage (3):
the DC. voltage source (1) includes a series circuit formed of a first DC voltage source (1a) and a second DC voltage source (1b);
the first DC voltage source (1a) is connected to a series circuit formed of the first switching element (9) and the second switching element (11), and
the inductance element (7), the energy storage (3), and the second DC voltage source (1b) form a series circuit connected to both ends of the second switching element (11).

5. The DC-DC converter of claim 1, wherein when the DC-DC converter (5) is connected between the DC-voltage source (1) and the energy storage (3):
the first switching element (9) and the DC voltage source (1) form a series circuit connected to both ends of the inductance element (7); and
the second switching element (11) and the energy storage (3) form a series circuit connected to both ends of the inductance element (7).

6. The DC-DC converter of claim 1, further comprising:
a drive switching element (33) connectable to the DC voltage source (1), the drive switching element (33) being turned on and off synchronously with the first switching element (9); and
a transformer (31) including a primary winding (31a) and a secondary winding (31b), the primary winding (3 1 a) being connectable between the DC voltage source (1) and the drive switching element (33), and the secondary winding (31b) being connectable to a series circuit formed of the first switching element (9) and the second switching element (11), wherein the transformer (31) is configured to apply a voltage generated by the secondary winding (31 b) to the inductance element (7) and storing energy in the inductance element (7) when the first switching element (9) is in the ON state.

7. The DC-DC converter (5) of claim 1, further comprising:
a current detector (41) for detecting current flowing through one of an output of the DC-DC converter (5), an input of the DC-DC converter (5) and the inductance element (7); and
a current command generation circuit (43) for generating a current command value to adjust the current detected by the current detector, wherein
the PWM control circuit (21) adjusts the on-off ratio according to the current command value instead of detecting the voltage of the energy storage (3) and controlling the voltage to be the target voltage when the DC-DC converter (5) is connected between the DC-voltage source (1) and the energy storage (3);
at the start-up of the DC-DC converter (5), the PWM control circuit (21) makes the current command generation circuit (43) generate the current command value so that a minimum value in one cycle of the current can be greater than zero amperes, instead of setting the target voltage higher than the normal operating voltage; and
when the start-up operation is completed, the PWM control circuit (21) controls so that the current command value is a target current value and that the second switching element (11) starts to turn on and off either when the minimum value becomes greater than zero amperes or when the current command value becomes equal to or greater than a specified current value, instead of returning the target voltage to the normal operating voltage.

8. The DC-DC converter (5) of claim 1, further comprising:
a selection switching element (51) connected to the DC voltage source (1), the selection switching element selecting one of outputting the voltage of the DC voltage source (1) in a forward direction, outputting the voltage of the DC voltage source (1) in a reverse direction, outputting a voltage of 0 volts, and opening the output, when the DC-DC converter (5) is connected between the DC-voltage source (1) and the energy storage (3); and
a transformer (31) including a primary winding (31a), a first secondary winding, and a second secondary winding, the primary winding (31a) being connected to an output of the selection switching element (11), and the second switching element being connected between the first secondary winding and the inductance element (7), and another second switching element being connected between the second secondary winding and the inductance element (7), and a connection point between the first secondary winding and the second secondary winding being connected to a negative electrode of the energy storage (3), wherein
when the target voltage is set higher than the normal operating voltage at the start-up, the PWM control circuit (21) places the second switching element (11) connected to the first secondary winding in the ON state synchronously with a time when the forward direction is selected by the selection switching element; places the second switching element (11) connected to the second secondary winding in the ON state synchronously with a time when the reverse direction is selected by the selection switching element; and places the second switching elements both in the OFF state synchronously with a time when the output of the selection switching element is opened; and
when the start-up operation is completed, the PWM control circuit (21) returns the target voltage to the normal operating voltage.

9. The DC-DC converter (5) of claim 8, further comprising:
a current detector for detecting current flowing through one of an output of the DC-DC converter (5), an input of the DC-DC converter (5), the inductance element (7), and the primary winding (31a) of the transformer (31); and
a current command generation circuit for generating a current command value to adjust the current detected by the current detector, wherein
the PWM control circuit (21) adjusts the on-off ratio according to the current command value instead of detecting the voltage of the energy storage (3) when the DC-DC converter (5) is connected between the DC-voltage source (1) and the energy storage (3) and controlling the voltage to be the target voltage;
at the start-up of the DC-DC converter (5), the PWM control circuit (21) makes the current command generation circuit generate the current command value so that a minimum value in one cycle of the current can be greater than zero amperes, instead of setting the target voltage higher than the normal operating voltage; and
when the start-up operation is completed, the PWM control circuit (21) controls so that the current command value is a target current value and that both the second switching elements start to turn on and off either when the minimum value becomes greater than zero amperes or when the current command value becomes equal to or greater than a specified current value, instead of returning the target voltage to the normal operating voltage.

10. A DC-DC converter (5) connectable between a DC voltage source (1) and an energy storage (3), comprising:
a first switching element (9) repeatedly turned on and off;
a second switching element (11) repeatedly turned on and off alternately with the first switching element (9);
a transformer including a primary winding (31a) which is connectable between the DC voltage source (1) and the first switching element (9), and a secondary winding (31b) connected to the second switching element (11), wherein when the DC-DC converter (5) is connected between the DC-voltage source (1) and the energy storage (3), the transformer applies the voltage of the DC voltage source (1) to the primary winding (31a) and stores energy in the primary winding (31a) when the first switching element (9) is in the ON state, and charges the energy to the energy storage (3) when the second switching element (11) is in the ON state;
a diode (13) connected in parallel to the second switching element (11) and in a direction in which a current flows to charge the energy storage (3);
and a PWM control circuit (21) for detecting a voltage of the energy storage (3) and adjusting an on-off ratio of the first switching element (9) so as to control the detected voltage to be a target voltage;
**characterized in that**:
at a start-up of the DC-DC converter (5), the PWM control circuit (21) controls so that the first switching element (9) gradually increases the on-off ratio from a minimum on-off ratio, that the second switching element (11) is placed in an OFF state, and that the target voltage is set higher than a normal operating voltage, and
when a start-up operation is completed, the PWM control circuit (21) controls so that the second switching element (11) starts to turn on and off, and that the target voltage is returned to the normal operating voltage; and
the start-up means either when the DC-DC converter (5) starts to move from a stationary state or when the DC-DC converter (5) starts synchronous rectification from a state in which the first switching element (9) has a minimum on-off ratio and the second switching element (11) is in the off state.

## Patentansprüche

1. Gleichstrom-Gleichstrom-Wandler, der zwischen eine Gleichstromspannungsquelle (1) und einen Energiespeicher (3) schaltbar ist, umfassend:
ein erstes Schaltelement (9), das wiederholt ein- und ausgeschaltet wird;
ein zweites Schaltelement (11), das wechselseitig mit dem ersten Schaltelement (9) wiederholt ein- und ausgeschaltet wird;
ein induktives Element (7) zum Empfangen einer Spannung von der Gleichstromspannungsquelle (1) und zum Speichern von Energie darin, wenn das erste Schaltelement (9) in einem EIN-Zustand ist, und zum Laden der Energie in den Energiespeicher (3), wenn das zweite Schaltelement (11) in einem EIN-Zustand ist;
eine Diode (13), die parallel zu dem zweiten Schaltelement (11) und in eine Richtung, in welche ein Strom fließt, um den Energiespeicher zu laden, geschaltet ist; und
einen PWM-Steuerkreis (21) zum Detektieren einer Spannung des Energiespeichers (3) und zum Justieren eines Ein-Aus-Verhältnisses des ersten Schaltelements (9), um die detektierte Spannung so zu steuern, dass sie eine Zielspannung ist;
**dadurch gekennzeichnet, dass**
bei einer Inbetriebnahme des Gleichstrom-Gleichstrom-Wandlers (5) der PWM-Steuerkreis (21) so steuert, dass das erste Schaltelement (9) das Ein-Aus-Verhältnis ausgehend von einem minimalen Ein-Aus-Verhältnis graduell erhöht, dass das zweite Schaltelement (11) in einen AUS-Zustand versetzt wird und dass die Zielspannung höher als eine normale Betriebsspannung eingestellt wird,
wenn die Inbetriebnahme komplettiert ist, der PWM-Steuerkreis so steuert, dass das zweite Schaltelement (11) beginnt ein- und auszuschalten und dass die Zielspannung zu der normalen Betriebsspannung zurückgeführt wird; und
Inbetriebnahme entweder bedeutet, dass der Gleichstrom-Gleichstrom-Wandler beginnt, sich aus einem stationären Zustand zu bewegen oder dass der Gleichstrom-Gleichstrom-Wandler (5) synchrones Gleichrichten aus einem Zustand startet, in welchem das erste Schaltelement (9) ein minimales Ein-Aus-Verhältnis aufweist und das zweite Schaltelement (11) in dem AUS-Zustand ist.

2. Gleichstrom-Gleichstrom-Wandler (5) nach Anspruch 1, wobei, wenn der Gleichstrom-Gleichstrom-Wandler (5) zwischen die Gleichstromspannungsquelle (1) und den Energiespeicher (3) geschaltet ist:
das erste Schaltelement (9) und das zweite Schaltelement (11) eine Serienschaltung bilden, die mit dem Energiespeicher (3) verbunden ist, und
das induktive Element (7) und die Gleichspannungsquelle (1) eine Serienschaltung bilden, die mit beiden Enden des ersten Schaltelements (9) verbunden ist.

3. Gleichstrom-Gleichstrom-Wandler (5) nach Anspruch 1, wobei, wenn der Gleichstrom-Gleichstrom-Wandler (5) zwischen die Gleichstromspannungsquelle (1) und den Energiespeicher (3) geschaltet ist:
das erste Schaltelement (9) und das zweite Schaltelement (11) eine Serienschaltung bilden, die mit der Gleichstromspannungsquelle (1) verbunden ist, und
das induktive Element (7) und der Energiespeicher (3) eine Serienschaltung bilden, die mit beiden Enden des zweiten Schaltelements (11) verbunden ist.

4. Gleichstrom-Gleichstrom-Wandler (5) nach Anspruch 1, wobei, wenn der Gleichstrom-Gleichstrom-Wandler (5) zwischen die Gleichstromspannungsquelle (1) und den Energiespeicher (3) geschaltet ist:
die Gleichstromspannungsquelle (1) eine Serienschaltung beinhaltet, die von einer ersten Gleichstromspannungsquelle (1a) und einer zweiten Gleichstromspannungsquelle (1b) gebildet wird;
die erste Gleichstromspannungsquelle (1a) mit einer Serienschaltung verbunden ist, die aus dem ersten Schaltelement (9) und dem zweiten Schaltelement (11) gebildet wird, und
das induktive Element (7), der Energiespeicher (3) und die zweite Gleichstromspannungsquelle (1b) eine Serienschaltung bilden, die mit beiden Enden des zweiten Schaltelements (11) verbunden ist.

5. Gleichstrom-Gleichstrom-Wandler (5) nach Anspruch 1, wobei, wenn der Gleichstrom-Gleichstrom-Wandler (5) zwischen die Gleichstromspannungsquelle (1) und den Energiespeicher (3) geschaltet ist:
das erste Schaltelement (9) und die Gleichstromspannungsquelle (1) eine Serienschaltung bilden, die mit beiden Enden des induktiven Elements (7) verbunden ist; und
das zweite Schaltelement (11) und der Energiespeicher (3) eine Serienschaltung bilden, die mit beiden Enden des induktiven Elements (7) verbunden ist.

6. Gleichstrom-Gleichstrom-Wandler nach Anspruch 1, ferner umfassend:
ein Antriebsschaltelement (33), welches mit der Gleichstromspannungsquelle (1) verbindbar ist, wobei das Antriebsschaltelement (33) synchron mit dem ersten Schaltelement (9) ein- und ausgeschaltet wird; und
einen Transformator (31), welcher eine Primärwicklung (31a) und eine Sekundärwicklung (31b) beinhaltet, wobei die Primärwicklung (31a) zwischen die Gleichstromspannungsquelle (1) und das Antriebsschaltelement (33) schaltbar ist und wobei die Sekundärwicklung (31b) mit einer Serienschaltung verbindbar ist, die von dem ersten Schaltelement (9) und dem zweiten Schaltelement (11) gebildet wird, wobei der Transformator (31) konfiguriert ist, eine mittels der Sekundärwicklung (31b) erzeugte Spannung an das induktive Element (7) anzulegen und Energie in dem induktiven Element (7) zu speichern, wenn das erste Schaltelement (9) in dem EIN-Zustand ist.

7. Gleichstrom-Gleichstrom-Wandler (5) nach Anspruch 1, ferner umfassend:
einen Stromdetektor (41) zum Detektieren von Strom, der durch eines aus einem Ausgang des Gleichstrom-Gleichstrom-Wandlers (5), einem Eingang des Gleichstrom-Gleichstrom-Wandlers (5) und dem induktiven Element (7) fließt; und
eine Befehlstromerzeugungsschaltung (43) zum Erzeugen eines Befehlstromwerts, um den von dem Stromdetektor detektierten Strom zu justieren, wobei der PWM-Steuerkreis (21) das Ein-Aus-Verhältnis entsprechend dem Befehlstromwert justiert anstatt die Spannung des Energiespeichers (3) zu detektieren und die Spannung,
welche die Zielspannung sein soll, wenn der Gleichstrom-Gleichstrom-Wandler zwischen die Gleichstromspannungsquelle (1) und den Energiespeicher (3) geschaltet ist, zu steuern;
bei der Inbetriebnahme des Gleichstrom-Gleichstrom-Wandlers (5) der PWM-Steuerkreis (21) die Befehlstromerzeugungsschaltung (43) veranlasst, den Befehlstromwert so zu generieren, dass ein Minimalwert in einem Zyklus des Stroms größer sein kann als 0 Ampere, anstatt die Zielspannung größer als die normale Betriebsspannung einzustellen; und wenn die Inbetriebnahme komplettiert ist, der PWM-Steuerkreis so steuert, dass der Befehlstromwert ein Zielstromwert ist und dass das zweite Schaltelement (11) beginnt, ein- und auszuschalten, entweder wenn der minimale Wert größer als 0 Ampere wird oder wenn der Befehlstromwert größer oder gleich als ein spezifizierter Stromwert wird, anstatt die Zielspannung zu der normalen Betriebsspannung zurückzuführen.

8. Gleichstrom-Gleichstrom-Wandler (5) nach Anspruch 1, ferner umfassend:
ein Auswahlschaltelement (51), das mit der Gleichstromspannungsquelle (1) verbunden ist, wobei das Auswahlschaltelement eines aus Ausgeben der Spannung aus der Gleichstromspannungsquelle (1) in eine Vorwärtsrichtung, Ausgeben der Spannung der Gleichstromspannungsquelle (1) in eine Rückwärtsrichtung, Ausgeben einer Spannung von 0 Volt und Öffnen der Ausgabe auswählt, wenn der Gleichstrom-Gleichstrom-Wandler (5) zwischen der Gleichstromspannungsquelle (1) und den Energiespeicher (3) geschaltet ist;
und
einen Transformator (31), der eine Primärwicklung (31a), eine erste Sekundärwicklung und eine zweite Sekundärwicklung beinhaltet, wobei die Primärwicklung (31a) mit einem Ausgang des Auswahlschaltelements (11) verbunden ist und das zweite Schaltelement zwischen die erste Sekundärwicklung und das induktive Element (7) geschaltet ist und
ein weiteres zweites Schaltelement zwischen die zweite Sekundärwicklung und das induktive Element (7) geschaltet ist und ein Verbindungspunkt zwischen der ersten Sekundärwicklung und der zweiten Sekundärwicklung mit einer negativen Elektrode des Energiespeichers (3) verbunden ist, wobei
wenn die Zielspannung bei der Inbetriebnahme höher als eine normale Betriebsspannung eingestellt wird, der PWM-Steuerkreis (21) das mit der ersten Sekundärwicklung verbundene zweite Schaltelement (11) zu einem Zeitpunkt, bei dem die Vorwärtsrichtung mittels des Auswahlschaltelements ausgewählt wird, synchron in den EIN-Zustand versetzt,
das mit der zweiten Sekundärwicklung verbundene zweite Schaltelement (11) zu einem Zeitpunkt, bei dem die Rückwärtsrichtung durch das Auswahlschaltelement ausgewählt wird, synchron in den EIN-Zustand versetzt und
die beiden zweiten Schaltelemente zu einem Zeitpunkt, bei dem der Ausgang des Auswahlschaltelements geöffnet wird, synchron in den AUS-Zustand versetzt; und
wenn der Inbetriebnahmevorgang komplettiert ist, der PWM-Steuerkreis (21) die Zielspannung zu der normalen Betriebsspannung zurückführt.

9. Gleichstrom-Gleichstrom-Wandler (5) nach Anspruch 8, ferner umfassend:
ein Stromdetektor zum Detektieren von Strom, der durch eines aus einem Ausgang des Gleichstrom-Gleichstrom-Wandlers (5), einem Eingang des Gleichstrom-Gleichstrom-Wandlers (5), dem induktiven Element (7) und der Primärwicklung (31a) des Transformators (31) fließt; und
eine Befehlstromerzeugungsschaltung zum Erzeugen eines Befehlstromwerts, um den durch den Stromdetektor detektierten Strom zu justieren, wobei
der PWM-Steuerkreis (21) das Ein-Aus-Verhältnis entsprechend der Befehlstromwerte justiert, anstatt die Spannung des Energiespeichers (3) zu detektieren, wenn der Gleichstrom-Gleichstrom-Wandler (5) zwischen die Gleichstromspannungsquelle (1) und den Energiespeicher (3) geschaltet ist, und die Spannung so zu steuern, dass sie die Zielspannung ist;
wobei bei der Inbetriebnahme des Gleichstrom-Gleichstrom-Wandlers (5) der PWM-Steuerkreis (21) die Befehlstromerzeugungschaltung veranlasst, den Befehlstromwert so zu erzeugen, dass ein minimaler Wert in einem Zyklus des Stroms größer als 0 Ampere sein kann, anstatt die Zielspannung höher als die normale Betriebsspannung einzustellen; und
wobei, wenn der Inbetriebnahmevorgang komplettiert ist, der PWM-Steuerkreis (21) so steuert, dass der Befehlstromwert ein Zielstromwert ist und dass beide zweiten Schaltelemente beginnen ein- und auszuschalten entweder, wenn der Minimalwert größer als 0 Ampere wird oder wenn der Befehlstromwert größer oder gleich als ein spezifischer Stromwert wird, anstatt die Zielspannung zu der normalen Betriebsspannung zurückzuführen.

10. Gleichstrom-Gleichstrom-Wandler (5), der zwischen eine Gleichstromspannungsquelle (1) und einen Energiespeicher (3) schaltbar ist, umfassend:
ein erstes Schaltelement (9), das wiederholt ein- und ausgeschaltet wird;
ein zweites Schaltelement (11), das wechselweise mit dem ersten Schaltelement (9) wiederholt ein- und ausgeschaltet wird;
einen Transformator, der eine Primärwicklung (31a), welche zwischen die Gleichstromspannungsquelle (1) und das erste Schaltelement (9) schaltbar ist, und eine Sekundärwicklung (31b), welche mit dem zweiten Schaltelement (11) verbunden ist, beinhaltet, wobei, wenn der Gleichstrom-Gleichstrom-Wandler (5) zwischen die Gleichstromspannungsquelle (1) und den Energiespeicher (3) geschaltet ist, der Transformator die Spannung der Gleichstromspannungsquelle (1) an die Primärwicklung (31a) anlegt und Energie in der Primärwicklung (31a) speichert, wenn das erste Schaltelement (9) in dem EIN-Zustand ist, und Energie in den Energiespeicher (3) lädt, wenn das zweite Schaltelement (11) in dem EIN-Zustand ist;
eine Diode (13), die parallel zu dem zweiten Schaltelement (11) ist und in eine Richtung, in welche der Strom fließt, um den Energiespeicher (3) zu laden, geschaltet ist; und
ein PWM-Steuerkreis (21) zum Detektieren einer Spannung des Energiespeichers (3) und zum Justieren eines Ein-Aus-Verhältnisses des ersten Schaltelements (9), um die detektierte Spannung so zu steuern, dass sie eine Zielspannung ist;
**dadurch gekennzeichnet, dass**
bei einer Inbetriebnahme des Gleichstrom-Gleichstrom-Wandlers (5) der PWM-Steuerkreis (21) so steuert, dass das erste Schaltelement (9) das Ein-Aus-Verhältnis ausgehend von einem minimalen Ein-Aus-Verhältnis graduell erhöht, dass das zweite Schaltelement (11) in einen AUS-Zustand versetzt wird und dass die Zielspannung höher eingestellt wird als eine normale Betriebsspannung, und
wenn die Inbetriebnahme komplettiert ist, der PWM-Steuerkreis (21) so steuert, dass das zweite Schaltelement (11) beginnt ein- und auszuschalten und dass die Zielspannung zu der normalen Betriebsspannung zurückgeführt wird; und
Inbetriebnahme entweder bedeutet, dass der Gleichstrom-Gleichstrom-Wandler (5) beginnt, sich aus einem stationären Zustand zu bewegen oder dass der Gleichstrom-Gleichstrom-Wandler (5) synchrones Gleichrichten aus einem Zustand beginnt, in welchem das erste Schaltelement (9) ein minimales Ein-Aus-Verhältnis aufweist und das zweite Schaltelement (11) in dem AUS-Zustand ist.

## Revendications

1. Convertisseur CC/CC (5) raccordable entre une source de tension CC (1) et un dispositif d'accumulation d'énergie (3), comprenant :
un premier élément de commutation (9) répétitivement conducteur et bloqué ;
un second élément de commutation (11) répétitivement conducteur et bloqué alternativement avec le premier élément de commutation (9) ;
un élément d'inductance (7) pour recevoir une tension d'une source de tension CC (1) et y stocker de l'énergie lorsque le premier élément de commutation (9) est dans un état conducteur, et pour charger l'énergie dans le dispositif d'accumulation d'énergie (3) lorsque le second élément de commutation (11) est dans un état conducteur ;
une diode (13) montée en parallèle sur le second élément de commutation (11) et dans une direction dans laquelle un courant passe pour charger le dispositif d'accumulation d'énergie (3) ; et
un circuit de commande à modulation de largeur d'impulsion (21) pour détecter une tension du dispositif d'accumulation d'énergie (3) et ajuster un rapport cyclique du premier élément de commutation (9) afin de commander la tension détectée pour être une tension cible ;
**caractérisé en ce que**
à un démarrage du convertisseur CC/CC (5), le circuit de commande à modulation de largeur d'impulsion (21) commande pour que le premier élément de commutation (9) augmente progressivement le rapport cyclique à partir d'un rapport cyclique minimum, pour que le second élément de commutation (11) soit placé dans un état bloqué, et pour que la tension cible soit réglée plus élevée qu'une tension de fonctionnement normale,
lorsqu'une opération de démarrage est terminée, le circuit de commande à modulation de largeur d'impulsion (21) commande pour que le second élément de commutation (11) commence à conduire et bloquer, et pour que la tension cible soit retournée à la tension de fonctionnement normale ; et
le moyen de démarrage soit lorsque le convertisseur CC/CC (5) démarre pour sortir d'un état stationnaire soit lorsque le convertisseur CC/CC (5) démarre un redressement synchrone à partir d'un état dans lequel le premier élément de commutation (9) a un rapport cyclique minimum et le second élément de commutation (11) est dans un état bloqué.

2. Convertisseur CC/CC (5) selon la revendication 1, dans lequel lorsque le convertisseur CC/CC (5) est raccordé entre la source de tension CC (1) et le dispositif d'accumulation d'énergie (3) ;
le premier élément de commutation (9) et le second élément de commutation (11) forment un circuit en série raccordé au dispositif d'accumulation d'énergie (3), et
l'élément d'inductance (7) et la source de tension CC (1) forment un circuit en série raccordé aux deux extrémités du premier élément de commutation (9).

3. Convertisseur CC/CC (5) selon la revendication 1, dans lequel lorsque convertisseur CC/CC (5) est raccordé entre la source de tension CC (1) et le dispositif d'accumulation d'énergie (3) :
le premier élément de commutation (9) et le second élément de commutation (11) forment un circuit en série raccordé à la source de tension CC (1), et
l'élément d'inductance (7) et le dispositif d'accumulation d'énergie (3) forment un circuit en série raccordé aux deux extrémités du second élément de commutation (11).

4. Convertisseur CC/CC (5) selon la revendication 1, dans lequel lorsque le convertisseur CC/CC (5) est raccordé entre la source de tension CC (1) et le dispositif d'accumulation d'énergie (3) :
la source de tension CC (1) comprend un circuit en série formé d'une première source de tension CC (1a) et d'une seconde source de tension CC (1b) ;
la première source de tension CC (1a) est raccordée à un circuit en série formé du premier élément de commutation (9) et du second élément de commutation (11), et
l'élément d'inductance (7), le dispositif d'accumulation d'énergie (3) et la seconde source de tension CC (1b) forment un circuit en série raccordé aux deux extrémités du second élément de commutation (11).

5. Convertisseur CC/CC (5) selon la revendication 1, dans lequel lorsque le convertisseur CC/CC (5) est raccordé entre la source de tension CC (1) et le dispositif d'accumulation d'énergie (3) :
le premier élément de commutation (9) et la source de tension CC (1) forment un circuit en série raccordé aux deux extrémités de l'élément d'inductance (7) ; et
le second élément de commutation (11) et le dispositif d'accumulation d'énergie (3) forment un circuit en série raccordé aux deux extrémités de l'élément d'inductance (7).

6. Convertisseur CC/CC selon la revendication 1, comprenant en outre :
un élément de commutation de commande (33) raccordable à la source de tension CC (1), l'élément de commutation de commande (33) étant conducteur et bloqué de façon synchrone avec le premier élément de commutation (9) ; et
un transformateur (31) comprenant un enroulement primaire (31a) et un enroulement secondaire (31 b), l'enroulement primaire (31 a) étant raccordable entre la source de tension CC (1) et l'élément de commutation de commande (33), et l'enroulement secondaire (31b) étant raccordable à un circuit en série formé du premier élément de commutation (9) et le second élément de commutation (11), dans lequel le transformateur (31) est configuré pour appliquer une tension générée par l'enroulement secondaire (31b) à l'élément d'inductance (7) et stocker de l'énergie dans l'élément d'inductance (7) lorsque le premier élément de commutation (9) est dans l'état conducteur.

7. Convertisseur CC/CC (5) selon la revendication 1, comprenant en outre :
un détecteur de courant (41) pour détecter un courant passant à travers la sortie du convertisseur CC/CC (5), l'entrée du convertisseur CC/CC (5) et l'élément d'inductance (7) ; et
un circuit de génération de commande de courant (43) pour générer une valeur de commande de courant pour ajuster le courant détecté par le détecteur de courant, dans lequel
le circuit de commande à modulation de largeur d'impulsion (21) ajuste le rapport cyclique selon la valeur de commande de courant au lieu de détecter la tension du dispositif d'accumulation d'énergie (3) et commander la tension pour être la tension cible lorsque le convertisseur CC/CC (5) est raccordé entre la source de tension CC (1) et le dispositif d'accumulation d'énergie (3) ;
au démarrage du convertisseur CC/CC (5), le circuit de commande à modulation de largeur d'impulsion (21) conduit le circuit de génération de commande de courant (43) à générer la valeur de commande de courant pour qu'une valeur minimum dans un cycle du courant puisse être plus grande que zéro ampère, au lieu de régler la tension cible plus élevée que la tension de fonctionnement normale ; et
lorsque l'opération de démarrage est terminée, le circuit de commande à modulation de largeur d'impulsion (21) commande pour que la valeur de commande de courant soit une valeur de courant cible et pour que le second élément de commutation (11) commence à conduire et bloquer soit lorsque la valeur minimum devient supérieure à zéro ampère soit lorsque la valeur de commande de courant devient égale ou supérieure à une valeur de courant spécifiée, au lieu de retourner la tension cible à la tension de fonctionnement normal.

8. Convertisseur CC/CC (5) selon la revendication 1, comprenant en outre :
un élément de commutation de sélection (51) raccordé à la source de tension CC (1), l'élément de commutation de sélection sélectionnant une de la fourniture de la tension de la source de tension CC (1) dans une direction vers l'avant, de la fourniture de tension de la source de tension CC (1) dans une direction inverse, de la fourniture d'une tension de 0 volt, et de l'ouverture de la sortie, lorsque le convertisseur CC/CC (5) est raccordé entre la source de tension CC (1) et le dispositif d'accumulation d'énergie (3) ; et
un transformateur (31) comprenant un enroulement primaire (31a), un premier enroulement secondaire, et un second enroulement secondaire, l'enroulement primaire (31a) étant raccordé à une sortie de l'élément de commutation de sélection (11), et le second élément de commutation étant raccordé entre le premier enroulement secondaire et l'élément d'inductance (7), et un autre second élément de commutation étant raccordé entre le second enroulement secondaire et l'élément d'inductance (7), et un point de raccordement entre le premier enroulement secondaire et le second enroulement secondaire étant raccordé à une électrode négative du dispositif d'accumulation d'énergie (3), dans lequel
lorsque la tension cible est réglée supérieure à la tension de fonctionnement normale au démarrage, le circuit de commande à modulation de largeur d'impulsion (21) place le second élément de commutation (11) raccordé au premier enroulement secondaire dans un état conducteur de façon synchrone avec un temps lorsque la direction vers l'avant est sélectionnée par l'élément de commutation de sélection ; place le second élément de commutation (11) raccordé au second enroulement secondaire dans l'état conducteur de façon synchrone avec un temps lorsque la direction inverse est sélectionnée par l'élément de commutation de sélection ; et place les seconds éléments de commutation à la fois dans l'état bloqué de façon synchrone avec un temps lorsque la sortie de l'élément de commutation de sélection est bloqué ; et
lorsque l'opération de démarrage est terminée, le circuit de commande à modulation de largeur d'impulsion (21) retourne la tension cible à la tension de fonctionnement normale.

9. Convertisseur CC/CC (5) selon la revendication 8, comprenant en outre :
un détecteur de courant pour détecter un courant passant à travers la sortie du convertisseur CC/CC (5), l'entrée du convertisseur CC/CC (5), l'élément d'inductance (7), et l'enroulement primaire (31a) du transformateur (31) ; et
un circuit de génération de commande de courant pour générer une valeur de commande de courant pour ajuster le courant détecté par le détecteur de courant, dans lequel
le circuit de commande à modulation de largeur d'impulsion (21) ajuste le rapport cyclique selon la valeur de commande de courant au lieu de détecter la tension du dispositif d'accumulation d'énergie (3) lorsque le convertisseur CC/CC (5) est raccordé entre la source de tension CC (1) et le dispositif d'accumulation d'énergie (3) et la commande de la tension pour être la tension cible ;
au démarrage du convertisseur CC/CC (5), le circuit de commande à modulation de largeur d'impulsion (21) conduit le circuit de génération de commande de courant à générer la valeur de commande de courant pour qu'une valeur minimum dans un cycle du courant puisse être supérieure à zéro ampère, au lieu de régler la tension cible supérieure à la tension de fonctionnement normale ; et
lorsque l'opération de démarrage est terminée, le circuit de commande à modulation de largeur d'impulsion (21) commande pour que la valeur de commande de courant soit une valeur de courant cible et pour qu'à la fois les seconds éléments de commutation démarrent pour conduire et bloquer soit lorsque la valeur minimum devient plus grande que zéro ampère, soit lorsque la valeur de commande de courant devient égale ou supérieure à une valeur de courant spécifiée, au lieu de retourner la tension cible à la tension de fonctionnement normale.

10. Convertisseur CC/CC (5) raccordable entre une source de tension CC (1) et un dispositif d'accumulation d'énergie (3), comprenant :
un premier élément de commutation (9) répétitivement conducteur et bloqué ;
un second élément de commutation (11) répétitivement conducteur et bloqué alternativement avec le premier élément de commutation (9) ;
un transformateur comprenant un enroulement primaire (31a) qui est raccordable entre la source de tension CC (1) et le premier élément de commutation (9), et un enroulement secondaire (31b) raccordé au second élément de commutation (11), dans lequel lorsque le convertisseur CC/CC (5) est raccordé entre la source de tension CC (1) et le dispositif d'accumulation d'énergie (3), le transformateur applique la tension de la source de tension CC (1) à l'enroulement primaire (31a) et stocke l'énergie dans l'enroulement primaire (31a) lorsque le premier élément de commutation (9) est dans un état conducteur, et charge de l'énergie dans le dispositif d'accumulation d'énergie (3) lorsque le second élément de commutation (11) est dans un état conducteur ;
une diode (13) montée en parallèle au second élément de commutation (11) et dans une direction dans laquelle un courant passe pour charger le dispositif d'accumulation d'énergie (3) ; et
un circuit de commande à modulation de largeur d'impulsion (21) pour détecter une tension du dispositif d'accumulation d'énergie (3) et ajuster un rapport cyclique du premier élément de commutation (9) afin de commander la tension détectée pour être une tension cible ;
**caractérisé en ce que**
à un démarrage du convertisseur CC/CC (5), le circuit de commande à modulation de largeur d'impulsion (21) commande pour que le premier élément de commutation (9) augmente progressivement le rapport cyclique à partir d'un rapport cyclique minimum, pour que le second élément de commutation (11) soit placé dans un état bloqué, et que la tension cible soit réglée plus élevée qu'une tension de fonctionnement normale, et
lorsqu'une opération de démarrage est terminée, le circuit de commande à modulation de largeur d'impulsion (21) commande pour que le second élément de commutation (11) commence à conduire et bloquer, et pour que la tension cible soit retournée à la tension de fonctionnement normale ; et
le moyen de démarrage soit lorsque le convertisseur CC/CC (5) démarre pour sortir d'un état stationnaire soit lorsque le convertisseur CC/CC (5) commence un redressement synchrone à partir d'un état dans lequel le premier élément de commutation (9) a un rapport cyclique minimum et le second élément de commutation (11) est dans un état bloqué.
